# EUROPÄISCHE PATENTSCHRIFT

(11) **EP 2 422 404 B1**
(45) Veröffentlichungstag und Bekanntmachung des Hinweises auf die Patenterteilung: **06.03.2013**
(21) Anmeldenummer: 10715688.7
(22) Anmeldetag: 08.04.2010
(51) Int. Cl.: H01Q 1/38, H01Q 1/48, H01Q 1/50, H01Q 15/00, H01Q 15/14, H01Q 15/16, H04W 88/08

(54) **VORRICHTUNG ZUM SENDEN UND VORZUGSWEISE EMPFANGEN VON SIGNALEN, INSBESONDERE MOBILFUNKSIGNALEN**
DEVICE FOR TRANSMITTING AND PREFERABLY RECEIVING SIGNALS, IN PARTICULAR MOBILE RADIO SIGNALS
DISPOSITIF D'ÉMISSION ET DE PRÉFÉRENCE DE RÉCEPTION DE SIGNAUX, EN PARTICULIER DE SIGNAUX DE RADIOTÉLÉPHONIE MOBILE

(30) Priorität: 23.04.2009 DE 102009018598
(43) Veröffentlichungstag der Anmeldung: 29.02.2012
(73) Patentinhaber: Kathrein-Werke KG, 83022 Rosenheim (DE)
(72) Erfinder: GABRIEL, Roland, 83556 Griesstätt (DE); SEEOR, Alexander, 83059 Kolbermoor (DE); FRITZE, Stefan, 83026 Rosenheim (DE); GUELLNER, Martin, 83071 Stephanskirchen (DE)
(74) Vertreter: Flach, Dieter Rolf Paul
(86) Internationale Anmeldenummer: PCT/EP2010/002203
(87) Internationale Veröffentlichungsnummer: WO 2010/121715

(56) Entgegenhaltungen:
- EP-A1- 1 320 146
- WO-A2-2008/078103
- US-A1- 2006 030 275

## Beschreibung

Die Erfindung betrifft eine Vorrichtung zum Senden und vorzugsweise auch zum Empfangen von Signalen, vorzugsweise von Mobilfunksignalen mit mehreren Kanälen, insbesondere Sende- und Empfangskanälen, nach dem Oberbegriff des Anspruches 1.

In der Mobilfunktechnik besteht die ständige Anforderung noch höhere Übertragungsraten zu realisieren. Von daher sind unterschiedliche technische Standards realisiert worden, die stets Verbesserungen bezüglich der Übertragungstechniken mit sich gebracht haben. So unterscheidet man in der Mobilfunktechnik beispielsweise zwischen Systemen wie GSM (Global System for Mobile Communications), HSCSD (High Speed Circuit Switched Data ), EDGE (Enhanced Data rates for GSM Evolution), UMTS (Universal Mobile Telecommunications System) und beispielsweise HSPA (High-Speed Packed Access). Die UMTS-Technik wird dabei auch als Technik der dritten Generation bezeichnet.

Neben dieser UMTS-Technik zeichnet sich nunmehr als Weiterentwicklung die Long Term Evolution (LTE) Technik ab, die UMTS ablösen bzw. weiterentwickeln soll. Es wird insoweit auch bei der LTE-Technik von der 3.9 Generation gesprochen, die somit zeitlich vor den nachfolgenden Techniken der vierten Generation liegt, die gleichwohl aber gegenüber alternativen Techniken wie beispielsweise WiMAX, eine vergleichsweise kostengünstige "bruch-freie", also evolutionäre Weiterentwicklung von UMTS zu LTE ermöglichen soll.

Die LTE-Technik verwendet dabei bekanntermaßen Orthogonal-Frequency-Division-Multiplexing-Techniken (OFDM), die letztlich auf der FDM-Technik, nämlich dem Frequency-Division-Multiplexing basiert. Bei dem FDM handelt es sich um ein nachrichtentechnisches Multiplex-Verfahren, mit dem gleichzeitig mehrere Signale auf mehreren Trägern verteilt übertragen werden können, wobei den mehreren Trägern unterschiedliche Frequenz zugeordnet werden. Beim orthogonalen FDM-Verfahren handelt es sich ebenfalls um ein Multi-carrier Modulations-Verfahren, bei welchem mehrere orthogonale Trägersignale für die digitale Datenübertragung verwendet werden.

Die LTE-Technik basiert dabei ferner zusätzlich auf der MIMO-Technik, wozu Antennen eingesetzt werden, die dem Multiple-Input-Multiple-Output-Prinzip Rechnung tragen.

Die LTE-Technik zeichnet sich dabei auch beispielsweise durch vergleichsweise geringe Latenzzeiten aus, wodurch sich die Sprachdienste (VoIP) oder beispielsweise auch die Videotelefonie verbessern lassen. So lassen sich beispielsweise mit der 4 x 4 MIMO-Technik eine Spitzendatenrate (Peak Data Rate) von beispielsweise über 300 Mbps im Downlink realisieren. Der Up-Link erreicht dabei immer noch eine Spitzendatenrate von über 75 Mbps, wenn beispielsweise eine single antenna verwendet wird.

Bei bekannten Mobilfunknetzen werden dabei auf der Basisstationsseite in der Regel Antennen verwendet, die vorwiegend ein oder zwei Antennensysteme für den Sendezweig und meistens zwei Antennensysteme für den Empfangszweig aufweisen. Bei einem "Antennensystem" können dabei zwei getrennte Antennen verstanden werden, wie aber auch eine dual polarisierte Antenne mit zwei entkoppelten Anschlüssen für die beiden senkrecht aufeinander stehenden Polarisationsebenen. Für den Empfangsfall liegt somit ein die Empfangsqualität verbesserndes Polarisations-Diversity oder auch ein sogenanntes Raum-Diversity vor.

Herkömmliche Mobilfunk-Basisstationen umfassen üblicherweise alle wesentlichen Teile, die zum Betrieb einer solchen Basisstation notwendig sind. Um zusätzliche Verluste sowohl in Sende- als auch in Empfangsrichtung zu minimieren, kann aber auch vom Radioserver getrennt und von diesem abgesetzt, d.h. in der Regel antennennah an einem Mast ein nachfolgend als Remote Radio Head (RRH) bezeichnetes Modul vorgesehen werden. Dieser übernimmt im Wesentlichen die Sende- und Empfangsverstärkung sowie die Modulation der Träger (Carrier) mit den über die optische Schnittstelle übertragenen I/Q-Signalen. Die Kommunikation zwischen dem Radioserver und dem davon getrennt am Mast antennennah vorgesehenen Remote Radio Head RRH erfolgt bevorzugt über eine optische Schnittstelle.

Wie bereits erwähnt ist bei der jüngsten MobilfunkStandard-Generation die Nutzung von Antennen vorgesehen, die Strahlereinrichtungen in mehreren Spalten umfassen. Dies eröffnet die eingangs geschilderte Möglichkeit die Antenne unter Verwendung der sogenannten MIMO-Technik zu betreiben. Dabei werden mehrere Datenströme sowohl sendeseitig als auch empfangsseitig durch die Sende-Empfangs-Einheit an die verschiedenen Antennensysteme übertragen.

Dies bedingt allerdings auch, dass zur Durchführung des MIMO-Betriebs sowohl die Basisstation als auch bei Verwendung konventioneller Remote Radio Heads (RRH) die Anzahl der erforderlichen Sende-Empfangs-Einheiten zunimmt. Auch dann, wenn mehrere Sende-Empfangs-Zweige in einem Gehäuse zusammen gefasst werden würden, würde üblicherweise die Anzahl der A/D-Wandler, die Anzahl der Signalaufbereitungs-Module sowie die Anzahl der Empfangs-Verstärker näherungsweise linear mit der Anzahl der benutzten Antennensysteme zunehmen.

Ein Sende-Empfangs-Modul zum Betrieb einer Mobilfunk-Basisstation unter Verwendung der MIMO-Technik ist beispielsweise aus der EP 1 923 954 A1 bekannt geworden. Die Basisstation ist dabei mit einer Antenneneinrichtung ausgestattet, die n-Spalten umfasst, in denen jeweils in Vertikalrichtung versetzt zueinander liegend dual polarisierte Strahler angeordnet sind, die beispielsweise in einem +45° Winkel bzw. -45° Winkel gegenüber der Horizontalen (bzw. der Vertikalen) ausgerichtet strahlen. Über eine Transmissions-Einheit wird den verschiedenen Spalteneingängen der Antenneneinrichtung jeweils ein Sendesignal zugeführt, wobei ferner eine Empfangseinheit mit den diversen Ausgängen der Antennenspalten verbunden ist. Sowohl die Übertragungseinheit wie die Empfangseinheit weist dazu mehrere Anschlüsse auf, die mit den entsprechenden Anschlüssen an den Spalten der einzelnen Antenneneinrichtungen verbunden ist.

Ein MIMO-System beispielsweise mit zwei Sende- und zwei Empfangs-Antennen ist auch aus der EP 1 643 661 B1 bekannt geworden.

Aus der DE 21 2005 000 081 U1 ist eine Mehrzweck-Standortbestimmungs-, Kommunikations- bzw. medizinisches Steuersystem bekannt geworden, welches zwei oder mehrere Antennen zum Empfangen von modulierten Hochfrequenz-Standortbestimmungssignalen und Kommunikationssignalen von drei oder mehr Standortbestimmungs- und Kommunikationssystemsendern umfasst.

Mit derartigen Einrichtungen können Standortbestimmungen vorgenommen werden, wobei zur räumlich korrekten Zuordnung in der Regel zumindest drei Empfangsantennen benötigt werden, um die Position eines sendenden Objektes durch Laufzeitmessungen über diese drei örtlich getrennten Antennensysteme exakt bestimmen zu können. Dabei ist das System so allgemein aufgebaut, dass es in einer spezifischen Anpassung auch als medizinisches Diagnose- und Kommunikationssystem verwendbar ist.

Mit anderen Worten befasst sich diese Vorveröffentlichung mit keiner Sendeantenne, insbesondere keiner kanalweisen Aufbereitung von Sendesignalen.

Darüber hinaus ist aus der US 2004/0085239 A1 ein Antennenarray im üblichen Aufbau bekannt geworden, bei welchem ein Sendesignal auf eine Vielzahl von Kanälen aufgespalten werden kann, um dann kanalweise aufbereitet zu werden. Das so kanalweise aufbereitete Sendesignal wird dann über eine jeweils zugeordnete Strahlereinrichtung des Antennenarrays gesendet.

Eine gattungsbildende Vorrichtung zum Senden und vorzugsweise Empfangen von Signalen, insbesondere Mobilfunksignalen ist aus der EP 1 320 146 A1 bekannt geworden. Das Antennensystem besteht aus mehreren Kanälen (Modulen) - (im gezeigten Ausführungsbeispiel aus drei Kanälen), die jeweils mit entsprechenden Mitteln zur Verarbeitung eines Sendesignals ausgestattet sind, mit Leistungsverstärkern, Filtern, etc.. Jedes Modul verarbeitet ein von den anderen Modulen unterschiedliches Sendesignal. Insbesondere wird jedes einzelne Modul mit dem Sendesignal einer bestimmten Basisstation angesteuert, die ein Netzbetreiber für einen bestimmten Kommunikationsstandard betreibt. Von daher kann das Antennensystems verschiedene Sendesignale von verschiedenen Kommunikationsstandards verarbeiten (GSM, UMTS, etc.). Allerdings kann jedes Modul nur ein dezidiertes Sendesignal verarbeiten, d.h. jedes Modul ist einem bestimmten Netzbetreiber und/oder Kommunikationsstandard zugeordnet.

Auch aus der WO 2008/078103 A2 ist ein zu dem vorstehend genannten Stand der Technik ähnliches Antennensystem bekannt geworden, bei welchem ein bestimmtes Sendesignal eines Netzbetreibers einem definierten Antennenmodul zur Sendesignal-Verarbeitung zugewiesen wird. Für jedes Sendesignal ist dabei eine individuelle Strahlformung möglich.

Schließlich beschreibt die US 2006/030275 A1 eine Antennen, bei der die Sendeleistung eines Sendesignals dadurch effizient verstärkt wird, dass mehrere einzelne Eingangssignale signalverstärkt und dann synchronisiert kombiniert werden. Allerdings stammen die einzelnen Eingangssignale nicht aus verschiedenen Kanälen, sondern werden aus einem einzigen Eingangssignal durch einen Signalsplitter erzeugt.

Demgegenüber ist es Aufgabe der vorliegenden Erfindung, ein verbessertes Sende-Modul zum Senden von Signalen und insbesondere Mobilfunksignalen und insbesondere ein Sende-Empfangs-Modul zum Senden und Empfangen von Signalen und insbesondere Mobilfunksignalen mit mehreren Kanälen zu schaffen, welches mit einem vorzugsweise basisstationsseitigen Radio-Server betrieben wird und dabei vorzugsweise antennennah, beispielsweise an einem Antennenmast oder einem sonstigen Antennen-Montageort angebracht werden kann. Mit anderen Worten ist es insoweit Aufgabe der vorliegenden Erfindung eine Vorrichtung zum Senden und vorzugsweise auch zum Empfangen von Signalen, insbesondere von Mobilfunksignalen zu schaffen, die eine flexiblere Verarbeitung der Sendesignale erlaubt.

Durch die erfindungsgemäße Lösung wird eine unerwartet hohe Variabilität geschaffen, die unterschiedliche Sende-Empfangs-Szenarien sowie unterschiedliche Entwicklungsmöglichkeiten berücksichtigt und einfache und damit auch kostengünstige Anpassmöglichkeiten in Abhängigkeit der sich ändernden Bedarfssituation zulässt.

Die erfindungsgemäße Lösung zeichnet sich unter anderem dadurch aus, dass bei der kanalweisen Aufbereitung des Sendesignals für die einzelnen Kanäle separate Leistungsverstärker vorgesehen sind, wobei für jeden Kanal oder zumindest für die überwiegende Anzahl der Kanäle zugehörige Duplexfilter vorgesehen sind. Dabei geht die Erfindung davon aus, dass zumindest vier Kanäle realisiert sind. Der Kern der Erfindung liegt darin, dass eine Controllereinrichtung vorgesehen ist, worüber mehrere oder alle Leistungsverstärker, die in mehreren oder allen Kanälen geschaltet sind, phasenrichtig oder phasenstarr zueinander betreibbar sind. Dies ermöglicht, dass die in den betreffenden Kanälen verstärkten Sendesignal synchronisierbar und dadurch zusammenschaltbar sind und alternativ durch die vorhandenen mehreren Duplexfilter die einzelnen Kanäle auch separat mit verschiedenen Signalen betrieben werden können. Damit lässt sich ein Sendesignal mit höherer Sendeleistung ausstrahlen.

Das erfindungsgemäße Sende-System eröffnet mit seiner kanalweisen Aufbereitung des Sendesignals (also über entsprechende Sendezweige, d. h. insbesondere Sende-Empfangs-Zweige) mittels einer zusätzlich vorgesehenen Controllereinrichtung (und insbesondere unter zusätzlicher Verwendung einer Umschaltmatrix) die Möglichkeit, dass je nach Belieben unterschiedliche Zweige zusammengefasst und aufaddiert werden können, um je nach Bedarf unterschiedlich starke Sendesignale zu erzeugen. Demgegenüber ist insbesondere bei der US 2004/0085239 A1 lediglich ein übliches Antennenarray beschrieben, bei welchem Signale kanalweise aufbereitet und in keinem Fall ausgangsseitig zusammengefasst werden, sondern wie üblich kanalweise jeweils einem Strahlelement zugeführt werden. Hierbei handelt es sich also insoweit um ein völlig anderes Sende-Prinzip.

Die erfindungsgemäße Variabilität sowie die erfindungsgemäße Anpassmöglichkeit an unterschiedliche veränderte Betriebszustände, an zu übertragende Frequenzbänder, Trägerfrequenzen etc. wird bevorzugt dadurch realisiert, dass eine Schaltmatrix vorgesehen ist, worüber die Sendesignale mit einer vorgebbaren Trägerfrequenz und nachgeschalteten Leistungsverstärkern je nach Anforderung den unterschiedlichen Antennensystemen zugeführt werden können. Dabei ist es über die erfindungsgemäß vorgesehene Schaltmatrix möglich beispielsweise zumindest vier vorgesehene Sendeeinrichtungen (Frequenz-Trägern) vier getrennten Antenneneinrichtungen zuzuführen (wobei die vier getrennten Antennensysteme auch aus zwei Spalten mit mehreren dual polarisierten Strahlereinrichtungen bestehen können, bei denen also Strahler in jeder der beiden Antennenspalten vorgesehen sind, die aufgrund ihrer senkrecht zueinander stehenden Polarisationsrichtung oder Polarisationsebene voneinander entkoppelt sind). Ebenso möglich ist es aber auch durch die erfindungsgemäß vorgesehene Schaltmatrix beispielsweise bei vier Sendekanälen (Sende-Frequenzträger) zwei, drei oder alle vier Sendesignale auf einen Antenneneingang zusammenzuschalten, wobei aufgrund der Zusammenschaltung auf einen Ausgang eine größere Sendeleistung realisierbar ist.

Erfindungsgemäß ist dazu allerdings ferner vorgesehen, dass die Phasenlagen der Signale die in den Verstärker eingespeist werden, die den einzelnen Sendekanälen zugeordnet sind, phasenstarr gekoppelt sind.

So lässt sich im Rahmen der Erfindung realisieren, dass beispielsweise zwei UMTS-Kanäle quasi unter Verdoppeltung der Antennenstrahlleistung zusammengeschaltet werden können oder dass GSM-Trägerfrequenzen zusammengeschaltet und einem zweiten getrennten Antenneneingang zugeführt werden können etc.. Möglich ist, dass, wie erwähnt, alle vier Sendesignale auf einen Antenneneingang zusammengeschaltet werden können oder dass beispielsweise unterschiedliche Trägerfrequenzen für unterschiedliche Kanäle vorgesehen werden, die den unterschiedlichen Antenneneingängen die Sendesignale zuführen. Dabei kann auch im folgenden Ausbau der gesamten Mobilfunk-Basisstation neueren Entwicklungen Rechnung getragen werden und beispielsweise ein neuer Kanal basierend auf der LTE-Technik oder mehrere Kanäle auf der LTE-Technik basierend umgesetzt werden.

Allgemein gesprochen wird erfindungsgemäß zumindest eine 4-Kanal-Ausführung einer Sende-Empfangs-Einheit realisiert, die mit einer ansteuerbaren Matrix-Schaltung ausgestattet ist und bei der, wie erwähnt, die vorgesehenen Leistungsverstärker für den jeweiligen Sendezweig in dem betreffenden Sendekanal phasenstarr koppelbar sind. Durch diese Konfiguration sind letztlich unterschiedliche Standards unterstützbar. Zudem ergibt sich eine bisher nicht geahnte Vielfalt von Konfigurationsmöglichkeiten. Denn im Rahmen der Erfindung können unterschiedliche Träger über verschiedene Zweige übertragen werden, wobei zwei oder mehrere gleiche Träger auf einen Zweig, d.h. auf einen Antenneneingang zusammengeschaltet werden können. Dieses Sende-Empfangs-Modul ist bevorzugt in einem Remote Radio Head (RRH) mit den erwähnten, zumindest vier Sende-Empfangs-Einheiten realisiert, die auch noch zusätzliche Vorteile aufweisen können:
● Die zumindest vier Sende-Empfangs-Einheiten können einen hohen Anteil der Signalaufbereitung gemeinsam nutzen. So kann beispielsweise ein Mehrfach-A/D-Wandler vorgesehen sein, d.h. beispielsweise bei einer 4-Kanal-Ausführung des Sende-Empfangs-Moduls kann ein 4facher A/D-Wandler verwendet werden. Desweiteren kann für die Aufwärtsmischung im Sendezweig des jeweiligen Kanals sowie für in den jeweiligen Empfangszweigen eine Phasenregelschleife (PLL) mit einem gemeinsamen Oszillator genutzt werden, sofern es sich um die gleichen Trägerfrequenzen handelt. Das gleiche gilt letztlich ebenso für die Verwendung eines optischen Wandlers sowie das gemeinsame Netzteil.
● Die mehrfachen Sendezweige können zur Linearisierung und Verstärkungsregelung das Sendesignal nutzen, welches über einen Auskoppelmechanismus aus dem entsprechenden Signalzweig ausgekoppelt wird und in schneller sequentieller Folge zur Linearisierung (DPD) genutzt werden kann.
● Vorteilhaft ist weiterhin, dass in Abhängigkeit der gewählten Konfiguration, also in Abhängigkeit der Sendekanäle die entsprechenden, hierfür passenden Duplexfilter vorgesehen sein können. Unter Umständen können sogar Duplexfilter verwendet werden, die für unterschiedliche, d.h. verschiedene Frequenzen oder Frequenzbereiche verwendbar sind. Denkbar wären beispielsweise Duplexfilter oder Duplexweichen mit verschiedenen Doppelfrequenzpaaren, die beispielsweise für einen 1800 MHz-Bereich sowie für den UMTS-Bereich geeignet wären.
● Zudem ist in einem üblichen Ausbauszenario eines neuen Netzes nicht stets vorhersehbar, ob zunächst mit den vorhandenen vier oder mehreren Antennensystemen nur ein herkömmlicher Standard (beispielsweise ein GSM-Standard oder ein UMTS-Standard) bedient werden soll und kann, oder ob nicht möglicherweise später einer oder mehrere oder eventuell sogar alle Kanäle auf den LTE-Standard oder nachfolgende Techniken umgerüstet werden sollen. Im Rahmen der Erfindung kann dabei beispielsweise bei einer 4-Kanal-Lösung zunächst eine 2-fach-MIMO Technik realisiert werden, in dem beispielsweise jeweils zwei Kanäle zusammengeschaltet werden, um dann später umzuschalten auf eine 4-fach-Lösung
● Der Vorteil bei der Zusammenschaltung liegt stets darin, dass alle der zumindest vier vorgesehenen Kanäle ausgenützt werden können, auch wenn beispielsweise zu gegebenem Zeitpunkt nur ein oder zwei Sendestandards realisiert werden sollen. Dies führt in diesem Fall, wie erwähnt, zur Erhöhung der Sendeleistung.

Schließlich kann auch eine hohe Breitbandigkeit der erfindungsgemäßen Vorrichtung dadurch erzielt werden, dass die Duplexfilter zumindest zwei parallel geschaltete Sendesignal-Bandpassfilter umfassen. Diese können eingangsseitig unterschiedlich zusammengeschaltet sein. Schließlich können auch die Leistungsverstärker zur Erzielung einer größeren Breitbandigkeit ebenfalls aus parallel geschalteten einzelnen Leistungsverstärkern für unterschiedliche Frequenzbereiche zusammengesetzt sein.

Weitere Vorteile, Einzelheiten und Merkmale der Erfindung ergeben sich aus den nachfolgenden, anhand von Zeichnungen erörterten Ausführungsbeispielen. Dabei zeigen im Einzelnen:
- Figur 1 :: eine Anordnung einer Mobilfunkstation nach dem Stand der Technik mit einem Radioserver RS und einem antennennahen, am Mast montierten Remote Radio Head RRH;
- Figur 2 :: eine vereinfachte Darstellung einer erfindungsgemäßen Basis-Konfiguration;
- Figur 3 :: eine zu Figur 2 in größerem Detail wiedergegebene Darstellung des Radioservers RS;
- Figur 4:: eine weitere Detaildarstellung für eine Kontrolleinheit für die Linearisierung und Phasenkalibrierung, wie sie bei der Darstellung gemäß Figur 3 verwendet ist;
- Figuren 5 bis 14 :: Beispiele für unterschiedliche Konfigurationen der Vorrichtung zum Senden und Empfangen von Signalen insbesondere für den Mobilfunkbereich;
- Figuren 5a bis 14a :: zu den Figuren 5 bis 14 ergänzende schematische Darstellung in welchem Frequenzbereich mit welcher Leistung (und mit welcher Bandbreite) gemäß den unterschiedlichen Standards die Sendesignale übertragen werden;
- Figur 6b:: ein zu Figur 2 und Figur 6a abgewandeltes Ausführungsbeispiel unter Weglassung einer Schaltmatrix;
- Figur 15 :: ein abgewandeltes Ausführungsbeispiel mit Duplex-Filter-Einrichtung unter Verwendung von parallel zueinander geschalteten Einzelbandfiltern; und
- Figur 16 :: ein nochmals abgewandeltes Ausführungsbeispiel mit gegenüber Figur 15 abweichend erfolgter Zusammenschaltung der mehreren parallel geschalteten Filterstufen im jeweiligen Sendezweig sowie mit breitbandig ausgelegtem Leistungsverstärker.

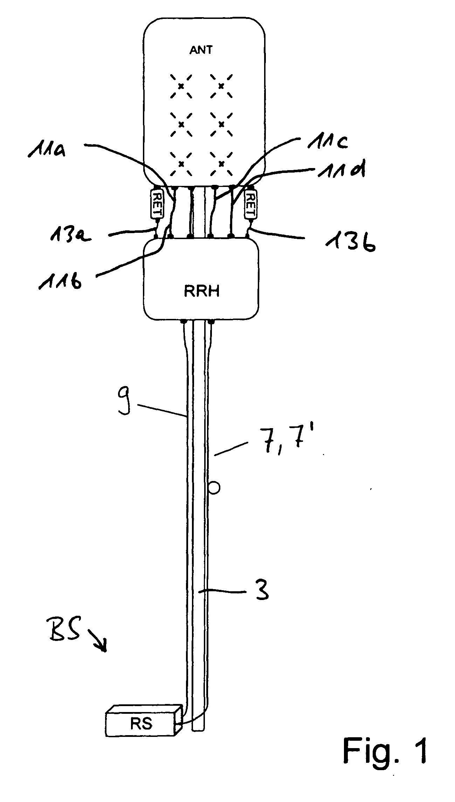

In Figur 1 ist eine Anordnung einer Mobilfunkstation nach dem Stand der Technik gezeigt. Diese Mobilfunk-Basisstation umfasst einen Radio-Server RS, der im Wesentlichen alle Basisband-Funktionen einer Basisstation übernimmt, einen Antennenmast 3, mehrere oben am Antennenmast 3 montierte Antenneneinrichtungen oder Antennenarrays ANT, sowie einen antennennah und damit vom Radio Server RS abgesetzt vorgesehenen Remote Radio Head RRH, der im Wesentlichen die Sende- und Empfangs-Verstärkung sowie die Modulation des Trägersignals durchführt. In dem Remote Radio Head RRH findet also im Wesentlichen keine Signalaufbereitung der einzelnen Mobilfunkteilnehmer statt, sondern es wird im Wesentlichen eine transparente Umwandlung eines IQ-Datenstromes in ein Hochfrequenzsignal vorgenommen.

Zwischen dem Radio-Server RS in der Basisstation und dem antennennah vorgesehenen Remote Radio Head RRH verlaufen im gezeigten Ausführungsbeispiel zwei Leitungen, nämlich eine Hauptleitung 7, die vorzugsweise aus einem Glasfaserkabel 7' besteht. Über diese Hauptleitung 7 werden in der Regel die Sende- und Empfangssignale sowie die Steuersignale zum Betrieb des Remote Radio Heads RRH übertragen. Übertragen werden also über die Hauptleitung 7 die Nutz- und Kontrolldaten. Daneben verläuft zwischen dem Radio-Server RS und dem Remote Radio Head RRH auch noch eine weitere Leitung 9, über welche beispielsweise eine Gleichstromversorgung für die in oder an der Antenne ANT sowie in dem Remote Radio Head RRH vorgesehenen Komponenten möglich ist.

Nur für den Fall, dass die in Figur 1 gezeigte Antennenanordnung in Ergänzung eines bestehenden Antennensystems hinzugefügt wird und/oder von einem bestehenden Antennensystem mit üblicherweise zwischen der Basisstation BS und der Antenne ANT verlaufenden Speiseleitungen zur Verfügung steht, könnte auf das Glasfaserkabel verzichtet werden, wenn der IQ-Datenstrom und die Steuerdaten über das vorhandene Speisekabel übertragen werden. Für eine derartige Kommunikation zwischen Remote Radio Head (RRH) und Radio Server (RS) kommt beispielsweise ein 64 QAM Mehrträgerverfahren oder ein OFDM Verfahren in Betracht. Dabei könnten über zumindest eine der vorhandenen Speisekabel nicht nur die Sende-, Empfangs- und Steuersignale, sondern auch der für den Betrieb verschiedener Funktionseinheiten Remote Radio Head RRH benötigte Gleichstrom (DC) übertragen und beispielsweise über ein sogenanntes Bias Tee zu den entsprechenden elektronischen Komponenten auskoppelt werden.

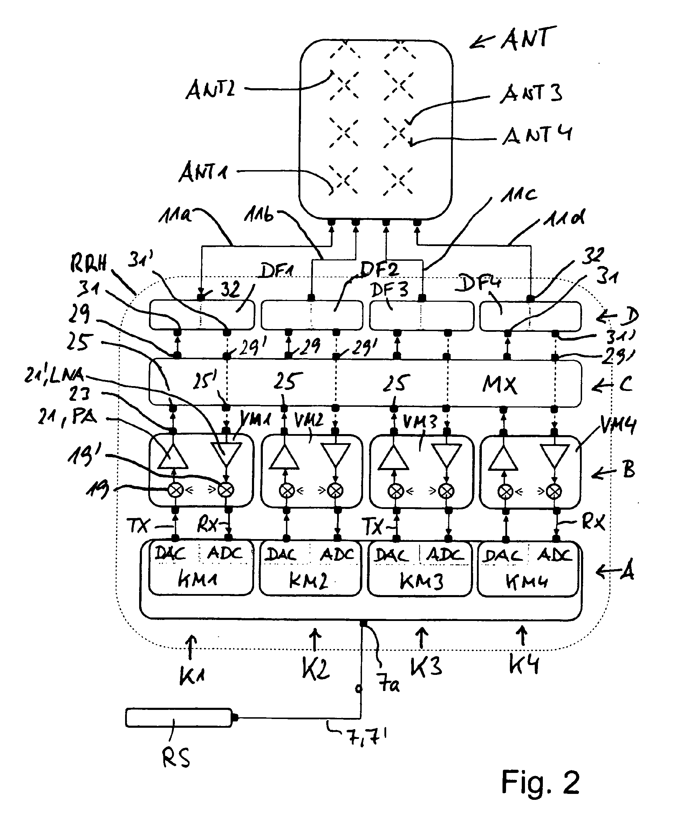

Der grundsätzliche Aufbau des Remote Radio Head RRH ist aus Figur 2 zu entnehmen, wobei dort ebenfalls wiederum die Antenneneinrichtung ANT sowie der Radio-Server RS dargestellt sind, wobei über die erwähnte Hauptleitung 7 zur Übertragung der Sende-, Empfangs- und Steuersignale mit dem RRH verbunden ist.

Wie bereits dabei in Figur 1 angedeutet ist, handelt es sich bei dem RRH um einen Mehrkanal-RRH, nämlich im gezeigten Ausführungsfall zum Betrieb von zumindest vier Sende-Empfangs-Einheiten, die nachfolgend teilweise auch als Sende-Empfangs-Zweige oder auch einfach kurz als Kanäle bezeichnet werden. Von daher umfasst auch die Antenneneinrichtung zumindest vier getrennte Antennensysteme, die grundsätzlich auch als vier Spalten-Antennenanordnung bezeichnet wird, obgleich im Konkreten nur jeweils zwei Spalten mit dual polarisierten Antennen verwendet werden, die beispielsweise in einem +45° Winkel bzw. -45° Winkel gegenüber der Vertikalen bzw. Horizontalen ausgerichtet sind. Im vorliegenden Fall sind zwei Spalten von Strahlereinrichtungen (Antennenarrays) gezeigt, die in zwei senkrecht zueinander stehenden Polarisationsebenen in dem besagten +45° Winkel bzw. -45° Winkel strahlen, so dass dies letztlich vier Antennensysteme ANT1, ANT2, ANT3, ANT4 ergibt, wobei jede Antenneneinrichtung jeweils für einen Übertragungskanal vorgesehen ist. Mit anderen Worten bildet also jedes Antennenarray mit den jeweils senkrecht zueinander ausgerichteten Polarisationsebenen im Sinne der Erfindung ein separates Antennensystem, so dass im gezeigten Ausführungsbeispiel letztlich vier getrennte Antennensysteme ANT1 bis ANT4 vorliegen. Gleichwohl können aber davon abweichend mehr als vier derartige getrennte Antennensysteme verwendet werden.

Schließlich wird bereits an dieser Stelle in Ergänzung zu Figur 1 angemerkt, dass zwischen dem RRH und der Antenneneinrichtung ANT neben den vier Sende-Empfangs-Leitungen 11a bis 11d für die vier getrennten Antennensysteme noch zwei weitere Übertragungsstrecken 13a und 13b (Figur 1) vorgesehen sein können, nämlich beispielsweise für sogenannte Remote Electrical Tilt (RET) Einheiten, worüber beispielsweise der Down-Tilt-Winkel ferngesteuert einstellbar ist, also der Absenkwinkel der Hauptkeule für die einzelnen Antennensysteme. Weitere ergänzende elektrische und elektronische Einrichtungen, beispielsweise in Form von GPS-Einrichtungen können vorgesehen und entsprechend betrieben werden. Einschränkungen gibt es auch insoweit nicht.

Aus dem grundsätzlichen Aufbau des Remote Radio Head RRH gemäß Figur 2 ergibt sich, dass dieser RRH in vier Stufen A bis D gegliedert sein kann.

Auf der Eingangsseite des RRH, wo die vorzugsweise aus einem Glasfaserkabel 7' endende Hauptleitung 7 angeschlossen ist, schließt sich zunächst eine unterschiedlich konfigurierbare digitale Plattform A an, die nachfolgend kurz auch als Kanal-Modul-Stufe A bezeichnet wird. Im gezeigten Fall dient diese Stufe im Wesentlichen zur Sende-EmpfangsSignal-Aufbereitung für jeden der im gezeigten Ausführungsbeispiel vier Kanäle K1, K2, K3 und K4.

Für den Anschluss 7a, d.h. für den Anschluss des Glasfaserkabels 7' zur Übertragung der Nutz- und Kontrolldaten kann als Anschluss-Schnittstelle 7a beispielsweise ein Ethernet-Anschluss (insbesondere ein Giga-Ethernet-Anschluss) oder beispielsweise ein CPRI-Interface (Common Public Radio Interface) oder beispielsweise auch ein OBSAI -Interface (Open Base Station Architecture Initiative) oder andere geeignete Schnittstellen vorgesehen sein.

Für die vier Sende- und Empfangskanäle K1 bis K4 sind für die Übertragung des jeweiligen Sendesignals TX zu einer der zugehörigen Antennen ANT1 bis ANT4 jeweils ein Digital-Analog-Konverter DAC und umgekehrt für den Empfang eines von einer der Antennen ANT1 bis ANT4 empfangenen Signals RX umgekehrt ein Analog-Digital-Konverter ADC in der Kanal-Modul-Stufe A vorgesehen.

Von daher können die vorstehend genannten Digital-Analog-Konverter bzw. Analog-Digital-Konverter in Kanalmodulen KM1 bis KM4 gegliedert sein. Wie nachfolgend noch gezeigt wird, können diese Kanalmodule beispielsweise mit zusätzlich vorgesehenen Steuereinheiten, Mikroprozessoren, Speicherelementen etc. mittels eines programmierbaren integrierten Schaltkreises FPGA gesteuert werden, der eine parallelisierte Signalaufbereitung für die Nutz- und Kontrolldaten ermöglicht. Wie später noch gezeigt wird, können die Kanalmodule KM1 bis KM4 unterschiedlichst konfiguriert werden, um darüber bei Bedarf die unterschiedlichsten Dienste (z.B. GSM-Dienste, UMTS-Dienste, LTE-Dienste etc.) durchführen zu können.

Die nächste Stufe B besteht aus einer Mischer- und/oder Verstärkerstufe B, die letztlich auch als zwei getrennte Stufen für die Signalmischung bzw. die Verstärkung umgesetzt werden könnte.

Dazu ist für jeden Kanal ein Verstärker/Mischer-Modul VM1 bis VM4 für die kanalabhängige Sendestrecke TX mit einem Mischer 19 vorgesehen, worüber die analogen Sendesignale auf die Trägerfrequenz hochgemischt werden. Umgekehrt wird in dem jeweiligen Empfangszweig RX eines jeden Kanals über einen entsprechenden Mischer 19' das Empfangssignal heruntergemischt.

Das über den Mischer 19 auf die Träger-Sendefrequenz hochgemischte TX-Signal wird nach dem Mischer 19 über einen Leistungsverstärker (PA) 21 verstärkt. Das in der jeweiligen Mischer-Verstärker-Stufe B empfangene Signal RX wird in der umgekehrten Richtung über einen Low-Noise-Verstärker (LNA) 21' vor dem Heruntermischen in dem Mischer 19' ebenfalls verstärkt.

Die antennenseitigen Ausgänge 23 für das jeweilige Sendesignal TX an der für jeden Kanal vorgesehenen Mischer-Verstärker-Stufe B sind mit entsprechenden Eingängen 25 an einer Schaltmatrix MX angeschlossen, die als n/n-Schaltmatrix ausgebildet ist. Diese Schaltmatrix bildet die dritte Stufe C.

Auf der Antennenseite schließt sich an diese Schaltmatrix-Stufe C als letzte Stufe D für jeden Kanal K1 bis K4 ein Duplex-Filter DF1 bis DF4 an, das am antennenseitigen Ausgang 29 für das Sendesignal TX in jedem Zweig das entsprechend hochgemischte, verstärkte und aufbereitete Sendesignal TX dem einen Eingang 31 eines jeweiligen Duplex-Filter DF1 bis DF4 zugeführt und an dem Antennenanschluss 32 über die Sende-Empfangs-Leitung 11a dem jeweiligen zugehörigen Antennensystem zugeführt wird. Der Anschluss 32 von dem ersten Duplex-Filter DF1 ist beispielsweise über die Sende-Empfangs-Leitung 11a mit dem ersten Antennensystem ANT1 verbunden. Entsprechend sind die Duplex-Filter der weiteren Kanäle K2 bis K4 mit den weiteren Antennen ANT2 bis ANT4 über die jeweilige Antennenleitung 11b bis 11d verbunden.

Andererseits wird das über das jeweilige Antennensystem empfangene Signal RX über die betreffende Sende-Empfangs-Leitung 11a, 11b 11c bzw. 11d dem jeweiligen Anschluss 32 des jeweils zugeordneten Duplex-Filters DF1, DF2, DF3 bzw. DF4 zugeführt und aufgrund des Bandpassfilters dann als Empfangssignal RX über den Anschluss 31' dem Matrixanschluss 29' zugeführt, durch die Umschaltmatrix MX durchgeschaltet, und zwar zu dem Radio-Server-seitigen Anschluss 25', wo das betreffende RX-Empfangssignal dann der jeweiligen Verstärker-Mischer-Stufe B zugeführt wird, um in dem dort vorgesehenen Verstärker 21' verstärkt und um den nachfolgenden Mischer 19' heruntergemischt zu werden.

Bereits durch diesen Aufbau ist zu ersehen, dass das von jedem Antennensystem ANT1, ANT2, ANT3 bzw. ANT4 empfangene Signal RX über die jeweiligen Duplex-Filter DF1, DF2, DF3 bzw. DF4 in der Duplex-Filter-Stufe D separat durch die Schaltmatrix C hindurch oder an dieser vorbei zu dem jeweils separaten zugeordneten Verstärker (LNA-Verstärker) 21' mit der nachfolgenden Stufe 19 zugeführt wird, um anschließend in dem ADC-Konverter des jeweiligen Kanals in der Kanal-Modul-Stufe A digitalisiert und über die Hauptleitung 7 zum Radio-Server RS geleitet zu werden.

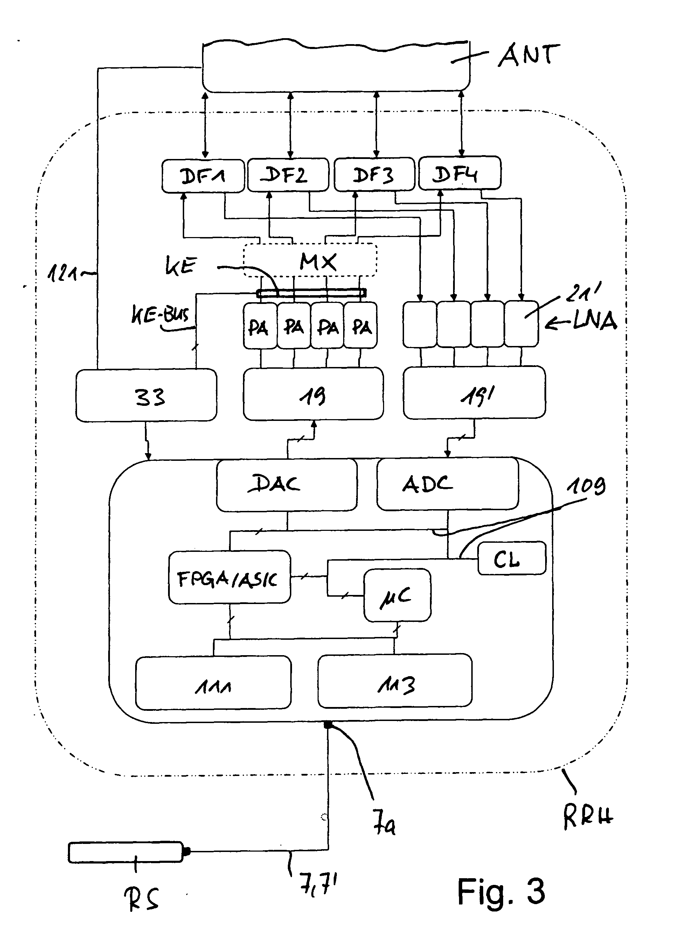

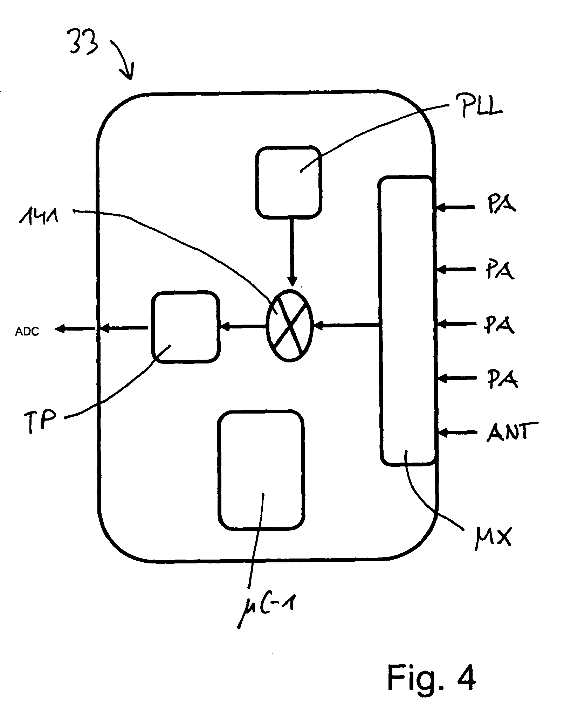

Um die nachfolgend erörterten vielfältigen unterschiedlichen Schaltmöglichkeiten für den Betrieb des geschilderten Antennensystems besser zu verstehen, wird nachfolgend anhand von Figur 3 und von Figur 4 die erste und zweite Stufe A und B in noch größerem Detail erläutert.

Aus Figur 3 ist zu ersehen, dass die rekonfigurierbare, mehrere Standard-Einstellungen zulassende Digital-Plattform in der Kanal-Modul-Stufe A unter anderem einen programmierbaren integrierten Schaltkreis, beispielsweise einen FPGA oder ASIC umfasst, der eine parallelisierte Signalaufbereitung für die Nutz- und Kontrolldaten ermöglicht. Dies erlaubt auch, die entsprechenden Daten parallel an die Digital-Änalog-Konverter weiterzuleiten bzw. die von Analog-Digital-Konvertern empfangenen Signale an den Radio-Server RS zu übermitteln.

In der in Figur 3 gezeigten Mischer-Verstärker-Stufe B kann zudem eine Kontrollereinrichtung 33 mit Rückkoppelschleife vorgesehen sein. Da die Verstärker 21 in jedem Kanal in der Mischer-Verstärker-Stufe B zudem mit einer Phasenregelung versehen sind, ist es möglich, über die Kontrollereinrichtung 33 alle Verstärker 21 für jeden Kanal phasenrichtig auszusteuern und zudem die Kontrollereinrichtung 33 auch für die Durchführung zur Linearisierung der Verstärker heranzuziehen. Dies ermöglicht letztlich, je nach Bedarf, die Sendesignale für die verschiedenen Kanäle unterschiedlich zusammenzu- schalten, da durch diese technische Maßnahme die Leistungsverstärker 21 phasenstarr, d.h. phasenrichtig koppelbar sind. Dazu wird bevorzugt die erwähnte Kontrollereinrichtung 33 für alle Kanäle verwendet. Durch den hohen Anteil der gemeinsamen Signalaufbereitung ergibt sich ebenfalls eine weitere Vereinfachung des Gesamtaufbaus.

Ferner ist aus Figur 3 ein für die Steuerung noch benötigter Mikroprozessor µC sowie die sogenannte "Clock" als Taktgenerator CL zu entnehmen. Neben der internen Busstruktur 109 ist für die Schnittstelle 7a auch schematisch eine Service-Schnittstelle 111 (z.B. Ethernet, USB, Serial, RIT etc.) sowie eine Daten-Kontroll-Schnittstelle zum Radioserver führend angedeutet (z.B. CPRI, OBSAI, ...), die mit Bezugszeichen 113 versehen ist.

Für die phasenrichtige Ansteuerung der einzelnen Leistungsverstärker 21 in den Kanälen K1 bis K4 wird aus dem Sendesignal TX mittels einer Kopplereinrichtung KE ein Signal ausgekoppelt, auf dessen Basis dann die phasenrichtige Ansteuerung aller Leistungsverstärker 21 in den anderen und vorzugsweise allen Kanalstufen durchgeführt wird. Im gezeigten Ausführungsbeispiel besteht die Kopplereinrichtung KE letztlich aus vier separaten Kopplern, die den einzelnen Leistungsverstärkern PA zugeordnet sind. Darüber kann aus dem Sendesignal ein Signal zur Linearisierung und Phasenkopplung ausgekoppelt werden, welches über eine Kontrolleinheit 33 für die Phasenkalibrierung als Rückkoppelsignal der Stufe A zugeführt wird. Zudem kann dieser Auskoppelmechanismus für das jeweilige Sendesignal in jedem der im gezeigten Ausführungsbeispiel vier Sendezweige auch zur Linearisierung der Leistungsverstärker genutzt werden. Dieser Auskoppelmechanismus kann so aufgebaut sein, dass das jeweilige Sendesignal aus dem jeweiligen Ausgang des Verstärkers 21 oder dem antennenseitigen Ausgang des Duplex-Filters 32 ausgekoppelt und in schneller sequentieller Folge zur phasenrichtigen Ansteuerung der Leistungsverstärker mit einem Referenzsignal verglichen wird, des weiteren kann der gleiche Mechanismus gleichzeitig zur Linearisierung des Sendesignals benutzt werden. Die Phasenregelung kann aber auch durch einen nicht sequentiell sondern parallel arbeitenden Koppler KE, beispielsweise einen Wilkinson-Koppler realisiert werden. In diesem Falle müssen jedoch für die verschiedenen Kanäle separate Testsignale verwendet werden. In beiden Fällen ergibt sich eine Vereinfachung des Gesamtaufbaus, da die vier Sende-Empfangs-Einheiten im gezeigten Ausführungsbeispiel zu einem hohen Anteil die Signalaufbereitung gemeinsam nutzen.

In bestimmten Fällen kann es auch hilfreich sein, die Linearisierung und/oder Phasenkalibrierung so durchzuführen, dass ein Signal aus den jeweiligen Übertragungswegen nach den Duplexfiltern DF1 bis DF4 bzw. aus dem Sendesignal TX ausgekoppelt wird, wofür die hierfür optional vorgesehene Auskoppelstrecke 121 vorgesehen ist, die wiederum im gezeigten Ausführungsbeispiel zur Kontrolleinheit 121 führt.

Anhand von Figur 4 ist noch in größerem Detail die erwähnte Kontrolleinrichtung 33 wiedergegeben, bei der beispielsweise über vier Eingänge die von der Koppeleinrichtung KE und dem Koppel-Bus KE-BUS der Kontrolleinrichtung 33 die entsprechenden Auskoppelsignale zur Linearisierung und/oder Phasenkalibrierung zugeführt werden. Schließlich ist in Figur 4 auch noch ein separater Eingang von der Antenne ANT kommend vorgesehen, wenn die entsprechenden Signale aus den vier Sendezweigen beispielsweise nach den Duplexfiltern bzw. vom Antenneneingang ausgekoppelt werden.

In der Kontrolleinheit KE ist ferner zu ersehen, dass hier wiederum ein Mikroprozessor µC-1 vorgesehen ist, eine Mischerstufe 141, ein Tiefpass TP sowie eine Phase-locked loop, also eine Phasenregelschleife, um die Phasenlage und damit zusammenhängend die Frequenz eines veränderbaren Oszillators und damit des Mischers 141 einzustellen. Mit dieser Kontrolleinheit 121 kann also letztlich die Antenne exakt kalibriert werden, da die Phasenlage exakt justiert wird.

Dabei ist in Figur 4 auch angedeutet, dass über den Tiefpass TP dann die entsprechende Ansteuerung der Analog-/Digital-Konverter ADC erfolgt.

Nachfolgend wird nunmehr anhand verschiedener Ausführungsbeispiele erläutert, wie der erfindungsgemäße Aufbau verwendet werden kann, um die Antenneneinrichtung insbesondere für eine Mobilfunkanlage für unterschiedliche Anforderungen zu verwenden.

Dabei sind die verschiedenen nachfolgend erörterten Szenarien auch anhand der in der Anlage beigefügten tabellarischen Übersicht aufgelistet, in der verschiedene Konfigurationsmöglichkeiten wiedergegeben sind.

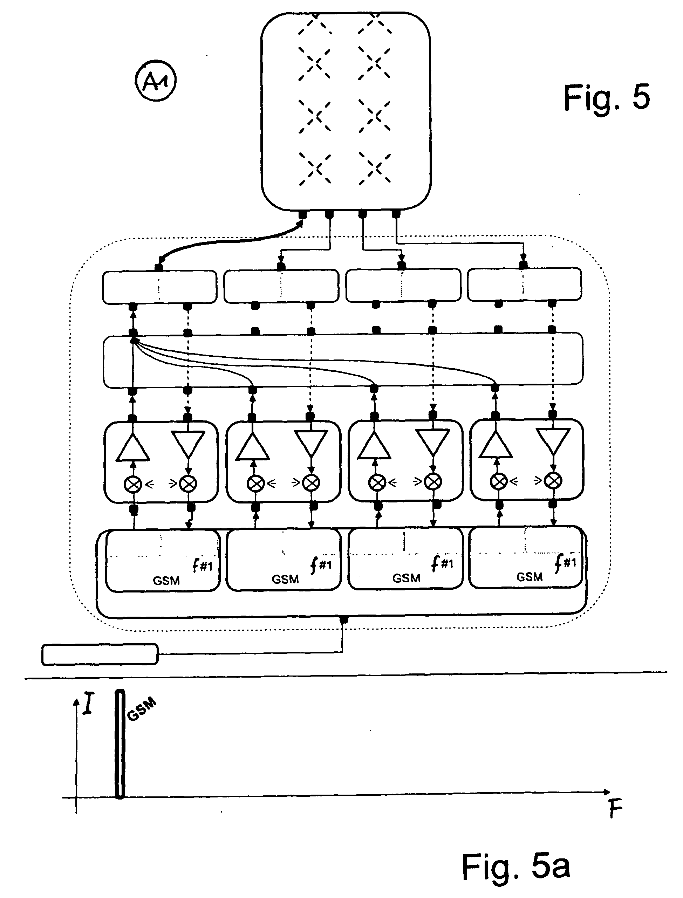

In Figur 5 ist dabei ein Ausführungsbeispiel mit einer Konfiguration A1 wiedergegeben, in welchem der anhand von Figur 2 erläuterte Gesamtaufbau für den Betrieb einer Antennenanlage verwendet wird, bei der die Gesamtantenne nur in einer Frequenz gemäß dem GSM-Standard betrieben wird, also in allen vier Kanälen. Dabei ist bei Figur 5, wie auch in den folgenden Figuren, jeweils eine begleitende Figur wiedergegeben, hier Figur 5a, in der auf der Horizontalachse bei zunehmender Frequenz F die in diesem Ausführungsbeispiel gewählte Sendefrequenz für den GSM-Standard eingezeichnet ist, und auf der Y-Achse die erzielbare Sendeleistung P. Da in diesem Ausführungsbeispiel alle vier Kanal-Verstärker 21 phasenstarr zueinander betrieben werden, ist es möglich, über die Umschaltmatrix MX alle vier in den vier Kanälen verstärkten Sendesignale zusammenzuschalten und über den gemeinsamen Matrix-Ausgang 31 des ersten Kanals K1 den Anschluss 32 über die Sende-Empfangs-Leitung 11a der Antenneneinrichtung ANT1 zuzuführen.

Damit lässt sich also eine besonders große Reichweite des Sendesignals erzielen.

In diesem, wie in den nachfolgenden Ausführungsbeispielen wird davon ausgegangen, dass der Verstärker 21 im ersten Kanal und im zweiten Kanal jeweils eine Sendeleistung von z.B. 25 Watt erzeugt, wohingegen der Verstärker 21 für den dritten Kanal K3 und den vierten Kanal K4 nur eine Sendeleistung von je 15 Watt aufweist. Durch die Zusammenschaltung aller Sendesignale ergibt sich damit ein GSM-Sendesignal von 80 Watt, wodurch eine große Sendereichweite erzielt wird. Die entsprechenden Daten für die Kanäle oder Spalten 1 bis 4 sind in der oben erwähnten und in der Anlage beigefügten tabellarischen Übersicht unter der Konfiguration A1 wiedergegeben.

Diese Zusammenschaltung der vier Sendesignale ist also möglich, da die Phasenlagen der vier Verstärker 21 synchronisiert werden. Die für die Linearisierung der Verstärker notwendige Auskopplung eines rückgekoppelten Signals wird dabei gleichzeitig auch für die Phasenregelung genutzt.

Die vorliegende Konfiguration A1 wie auch alle weiteren nachfolgend geschilderten Konfigurationen und noch weitergehende, nicht anhand von Zeichnungen erläuterte Konfigurationen, die im Rahmen der Erfindung möglich sind, sind beispielsweise in der in der Anlage beigefügten tabellarischen Übersicht wiedergegeben, und zwar mit allen für den Betrieb der jeweiligen Konfiguration wichtigen Einzeldaten.

Bereits bei dem Ausführungsbeispiel gemäß Figur 5 bezüglich der Konfiguration A1 wird angemerkt, dass in Abweichung zu den Sendesignalen TX (die beispielsweise bei der Variante gemäß Figur 5 in synchronisierter Form zusammengeschaltet und lediglich einem einzigen Antennensystem ANT1 zugeführt werden - sie können auch einem anderen Antennensystem ANT2, ANT3 oder ANT4 zugeführt werden), alle Empfangssignale RX in allen vier Antennensystemen ANT1 bis ANT4 getrennt voneinander durch die jeweilige Duplex-Filter-Einrichtung DF1 bis DF4 an der Matrixschaltung MX vorbei oder durch diese hindurch kanalweise weitergeschaltet werden, so dass das über die jeweilige Antenneneinrichtung empfangene RX-Signal dem jeweils zugehörigen Verstärker-Modul VM1, VM2, VM3 bzw. VM4 und nachfolgend dem jeweiligen Kanalmodul KM1, KM2, KM3 bzw. KM4 zugeführt wird, d.h. also dem für jedes Empfangssignal vorgesehenen AD-Konverter mit zugehöriger digitaler Signalaufbereitung, um dann über die Glasfaserkabel 7 zum Radio-Server RS durchgeschaltet zu werden.

Abweichend vom gezeigten Ausführungsbeispiel könnte auch eine Konfiguration A2 (lediglich in der beigefügten Tabelle aufgelistet und nicht in den Zeichnungen) realisiert werden, bei der beispielsweise die Ausgänge 29a und 29b für den ersten und zweiten Kanal und die Ausgänge 29c und 29d für den dritten und vierten Kanal zusammengeschaltet werden, so dass über die Sende-Empfangs-Leitung 11a der Antennenspalte bzw. dem Antennensystem ANT1 ein GSM-Standard-Signal bei einer ersten Trägerfrequenz f1 mit einer Stärke von beispielsweise 50 Watt und dem zweiten Antennensystem ANT3 ein GSM-Signal bei einer zweiten Trägerfrequenz f2 mit einer Gesamtleistung von 30 Watt zugeführt wird.

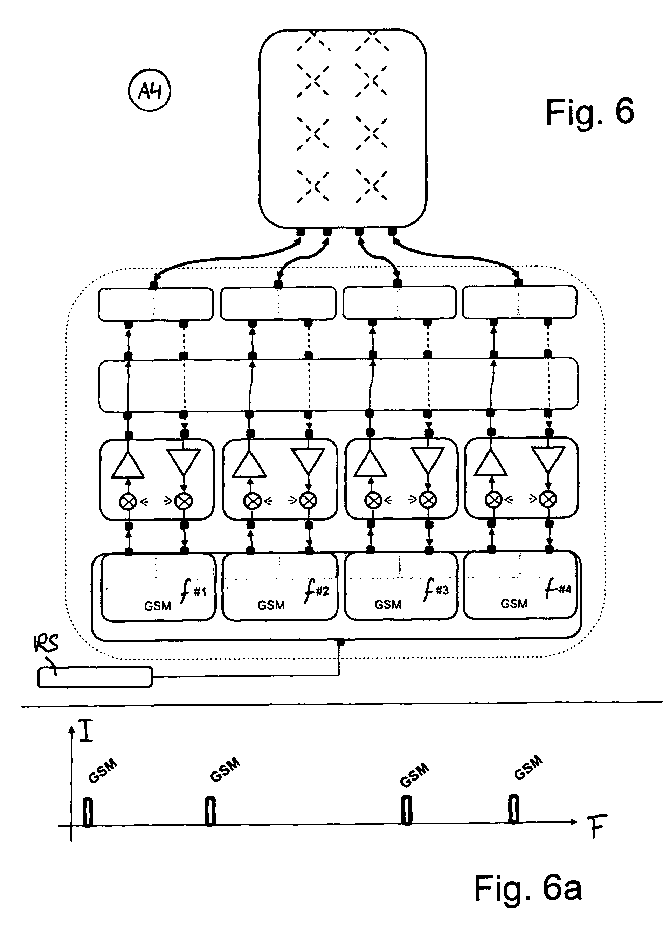

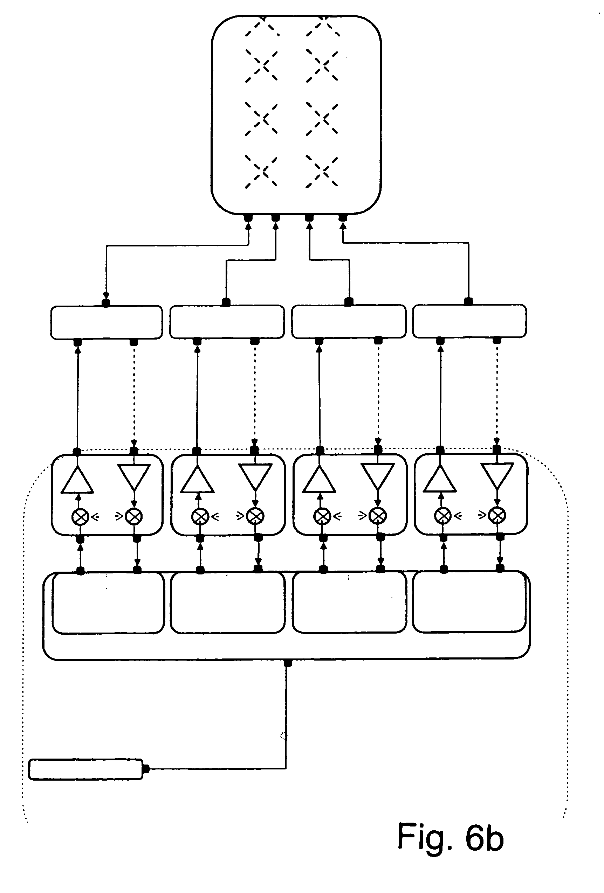

Anhand von Figuren 6 und 6a (Konfiguration A4) ist gezeigt, dass es im Rahmen der Erfindung natürlich auch möglich ist, dass jeder Kanal separat voneinander betrieben wird, d.h. dass die in jedem Kanal über die Verstärker 21 verstärkten Sendesignale TX über die kleine Schaltmatrix MX den vier separaten Duplex-Filtern DF1, DF2, DF3, DF4 zugeführt und über die vier getrennten Sende-Empfangs-Leitungen 11a, 11b, 11c, 11d den vier Antennensystemen ANT1 bis ANT4 zugeführt werden. Gemäß dieser Variante lassen sich, wie in Figur 6a dargestellt, vier GSM-Signale in vier versetzt zueinander liegenden Trägerfrequenzen f#1 bis f#4 mit gegenüber vorhergehenden Beispielen geringerer Sendeleistung abstrahlen, wobei zwei Kanäle mit 25 Watt und zwei Kanäle mit 15 Watt strahlen.

Während in bisher bekannten RRHs mehrere Träger mit unterschiedlichen Frequenzen über den gleichen Leistungsverstärker (PA) gesendet werden, wodurch die Anforderungen an den Leistungsverstärker (PA) erheblich steigen (denn er muss als Multi-Carrier Leistungsverstärker fungieren), ergibt sich im Rahmen der vorliegenden Erfindung der Vorteil, dass jeweils nur ein GSM-Träger durch einen Verstärker verstärkt werden muss, wodurch der Gesamtaufwand, insbesondere die Intermodulationsanforderungen, deutlich reduziert wird. Auch im Vergleich zur bekannten Kombination mehrerer Sendeverstärker über passive Combiner (Hybridcombiner) bietet die erfindungsgemäße Lösung den Vorteil einer nahezu verlustfreien Zusammenschaltung, während die Combinerlösung mindestens 3 dB verliert.

Auch hier werden, wie in allen gezeigten Beispielen, die empfangenen Signale RX über die vier Sende-Empfangs-Leitungen 11a bis 11d getrennt voneinander über die Duplex-Filter den in den einzelnen Kanälen K1 bis K4 vorgesehenen Verstärkerstufen LNA, d.h. den Verstärkerstufen 21' und den Mischern 19' zugeführt, um dann über die vier getrennten Analog-Digital-Konverter und die nachfolgende gemeinsame Signalübertragungsleitung 7 dem Remote-Server zugeführt zu werden.

Dass die Empfangssignale immer getrennt für jeden Kanal aufbereitet und dann gemeinsam über die Hauptleitung 7 übertragen werden, trifft für alle nachfolgend erörterten weiteren Ausführungsbeispiele zu. Jedoch ist es auch vorstellbar, bereits in dieser Sende- Empfangseinheit eine phasenrichtige Aufsummierung der verschiedenen RX-Signale vorzunehmen, um dadurch ein oder mehrere resultierende Strahlungsdiagramme der Antennenspalten zu erzeugen und diese Summensignale zum RS zu übertragen. Weiterführende Signalaufbereitungen im RRH sind denkbar.

In Abweichung zu dem Ausführungsbeispiel gemäß Figur 6a ist eine spezifische erfindungsgemäße Variante anhand von Figur 6b erläutert. Der Aufbau gemäß Figur 6b entspricht grundsätzlich jenem, wie er anhand von Figur 2, Figur 3, Figur 4 und auch anhand von Figur 6a für die dort beschriebene Konfiguration A3 erläutert ist. Die Besonderheit im vorliegenden Fall ist nun jedoch, dass bei der Variante gemäß Figur 6b auf die Schaltmatrix MX verzichtet worden ist. Mit anderen Worten sind die Ausgänge 23 der Verstärker-/Mischermodule VM1 bis VM4 direkt mit den entsprechenden Eingängen 31 an den Filterstufen DF1 bis DF4 verbunden (und zwar für die Sendesignale TX). Ebenso sind die Anschlüsse 31' an den Filterstufen DF1 bis DF4 für die Weiterleitung der Empfangssignale RX direkt mit den Anschlüssen für die Empfangs-Signalverstärker 21', LNA verbunden. Auch in dieser Ausführungsvariante können die Kanäle also separat voneinander betrieben werden. Es ergeben sich eine Reihe von Vorteilen bezüglich der zu verwendenden Standards, die unterschiedlich vorgewählt werden können, zur entsprechend unterschiedlichen Wahl der Bandbreite der gewählten Signale, der für die einzelnen Kanäle gewählten Sendeleistungen der Verstärker BA etc.

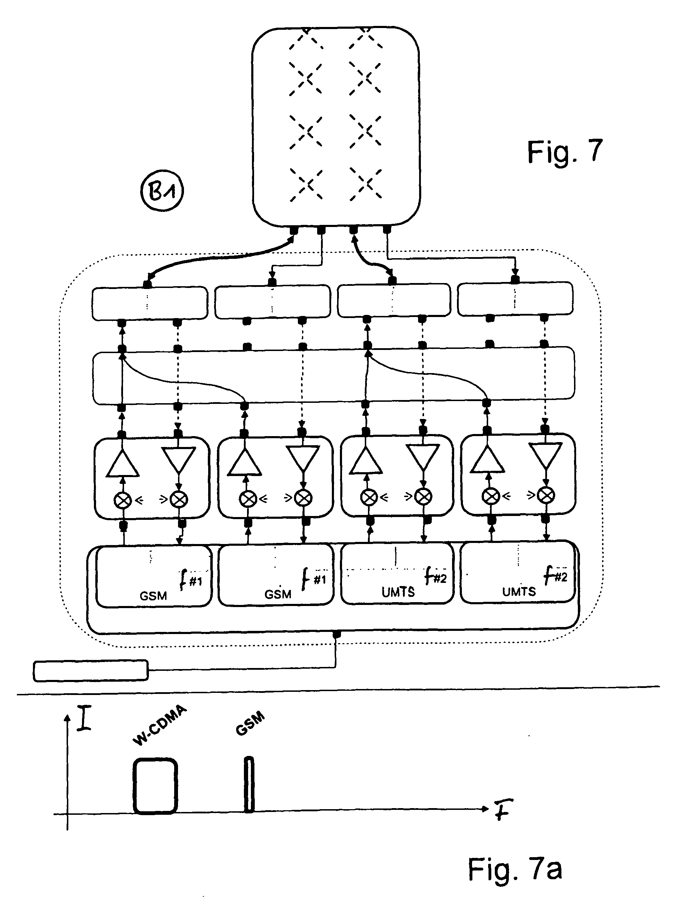

Anhand von Figur 7 wird ein Ausführungsbeispiel gemäß der Konfiguration B1 in der beigefügten Tabelle dargestellt.

Bei dieser Variante wird im ersten und zweiten Kanal K1 und K2 bei einer gemeinsamen Trägerfrequenz ein Signal im GSM-Standard übertragen. Im dritten und vierten Kanal K3 und K4 wird auf einer gemeinsamen Trägerfrequenz ein UMTS-Signal aufbereitet und gesendet. Dadurch kann bei der gezeigten Auswahl der betreffenden Verstärker ein Sendesignal in einem gemeinsamen Kanal gemäß dem GSM-Standard mit 50 Watt zur Erzielung einer erhöhten Reichweite in diesem Standard sowie ein Sendesignal mit 30 Watt in einem weiteren Kanal gemäß dem UMTS-Standard ebenfalls unter Erhöhung der Reichweite gegenüber einem Einzelkanal gesendet werden. Das UMTS-Signal wird dabei gemäß dem W-CDMA-Verfahren (Wideband-Code Division Multiple Access) gesendet, bei dem das Sendesignal stark gespreizt wird, so dass es eine größere Bandbreite einnimmt und somit weniger störanfällig gegen schmalbandige Störimpulse ist. Außerdem kann dadurch die Sendeleistung pro Hertz verringert werden. Dadurch ergibt sich auch die größere Bandbreite von beispielsweise 5 MHz.

Anhand der beigefügten Tabelle sind beispielsweise auch Konfigurationen B2, B3 und B4 gezeigt, wobei gemäß der Konfiguration B2 z.B. die ersten beiden GSM-Kanäle (die jeweils einen 25-Watt-Verstärker 21 aufweisen) zusammengeschaltet werden, wodurch sich ein einziger GSM-Kanal mit einer Leistung von 50 Watt unter Erzielung einer erhöhten Sendereichweite ergibt. Die beiden UMTS-Kanäle K3 und K4 werden separat betrieben, wobei sie in diesem Ausführungsbeispiel dann zwei UMTS-Trägerfrequenzen mit je 15 Watt Leistung ergeben.

Bei der Konfiguration B3 werden beispielsweise die beiden UMTS-Kanäle K3 und K4 zusammengeschaltet, die somit ein einziger UMTS-Träger mit 30 Watt ergeben, wohingegen die beiden GSM-Kanäle K1 und K2 mit jeweils 25 Watt zwei getrennte Träger TX1 und TX2 ausstrahlen.

Bei der Konfiguration B4 werden, ähnlich wie bei der Konfiguration A3, alle Kanäle getrennt betrieben, eine Überlagerung und Zusammenführung der einzelnen Sendesignale wird also nicht durchgeführt.

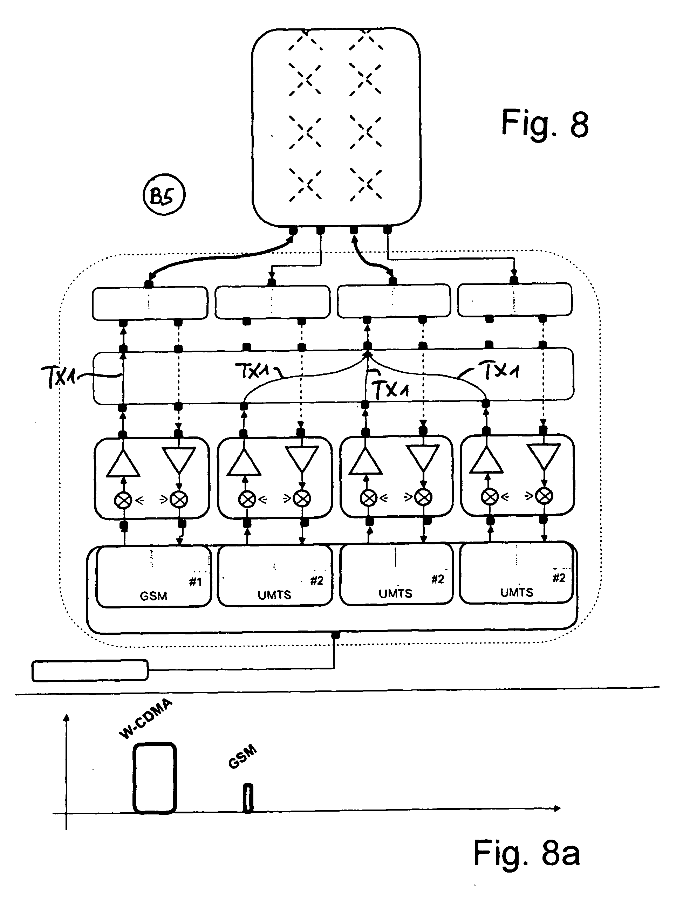

Nachfolgend wird auf die Figuren 8 und 8a Bezug genommen, in denen beispielsweise entsprechend der Konfiguration B5 (wie in der beigefügten Tabelle dargestellt) der erste Kanal in einem GSM-Standard separat betrieben wird, hier also ein separates Sendesignal TX1 abgestrahlt wird (hier beispielsweise mit einem Verstärker 21 mit einer Verstärkerleistung von 25 Watt), wohingegen die UMTS-Kanäle K2 bis K3 ein gemeinsames Sendesignal TX1 erzeugen, welches mittels der Schaltmatrix MX auf dem gemeinsamen Ausgang 31.3 zusammengefasst und über den nachgeordneten Duplex-Filter über die gemeinsame Sende-Leitung 11c dem Antennensystem ANT 3 zugeführt wird. Die Empfangssignale werden über alle vier Antennensysteme ANT1 bis ANT4 empfangen und über die vier Empfangsleitungen 11a bis 11d in alle vier Duplex-Filter DF1 bis DF4 der vier Empfangskanäle K1 bis K4 eingespeist und über die erwähnten Analog-Digital-Konverter und die zugehörige digitale Signalaufbereitung letztlich in digitalisierter Form dem Radio-Server RS zugeführt. In diesem Beispiel lässt sich somit ein UMTS-Sendesignal mit einer Leistung von beispielsweise 55 Watt (nämlich mit einem Verstärker mit 25 Watt und zwei Verstärkern mit je 15 Watt) erzielen.

Weitere mögliche Konfigurationen B6 bis B8 unter Verwendung eines GSM-Kanals und drei UMTS-Kanälen können aus der beigefügten Tabelle entnommen werden.

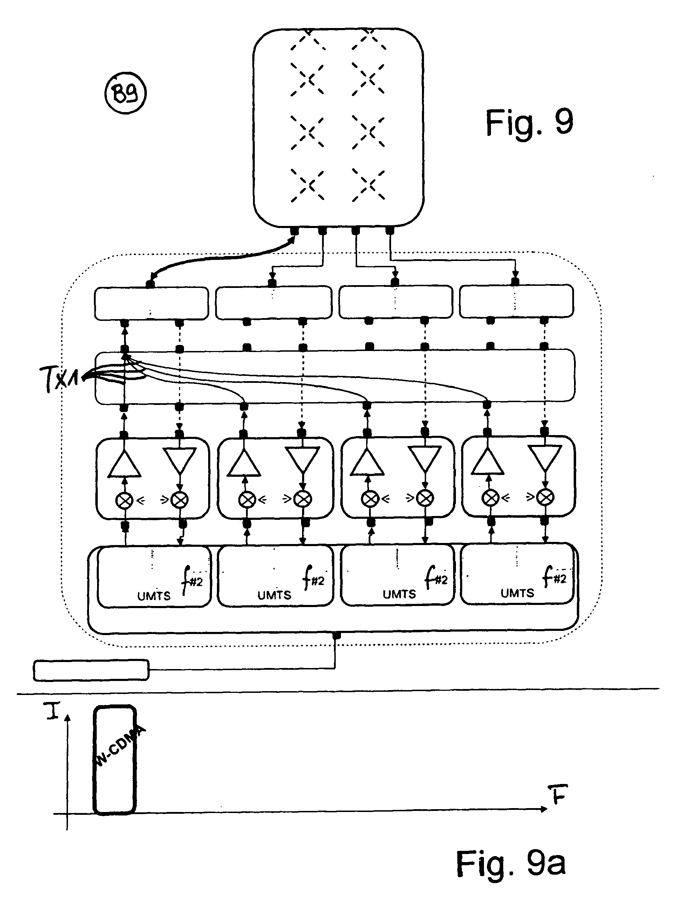

Gemäß dem Ausführungsbeispiel nach Figur 9 bzw. Figur 9a (entsprechend der Konfiguration B9 in der am Ende beigefügten Tabelle) können alle vier Kanäle K1 bis K4 Sendesignale TX1 gemäß dem UMTS-Standard senden (und empfangen). Gemäß dieser Variante sind, ähnlich wie bei der Konfiguration A1 für den GSM-Standard, aufgrund der erfolgten Synchronisation der vier Verstärker die Phasenlagen phasenrichtig zueinander zugeordnet (phasenstarr), wodurch die Zusammenschaltung auf einen Ausgang für ein zugeordnetes Antennensystem möglich ist. Dadurch lässt sich eine große Reichweite für dieses Wideband CDMA erzielen, d.h. hierbei ergibt sich die maximale Sendeleistung für das UMTS-Sendesignal an einer der Antennenspalten A1..A4.

Auch hier sind weitere unterschiedliche Konfigurationen möglich, bei denen beispielsweise zwei Zweiergruppen oder zumindest eine Zweiergruppe neben zwei Einzelkanälen oder eine Dreiergruppe von drei Kanälen mit einem verbleibenden UMTS-Kanal zusammengeschaltet werden können. Durch unterschiedliche Auswahl der Kanäle können dabei auch unterschiedliche Signalleistungen für das UMTS-Signal erzielt werden, da, wie im gezeigten Ausführungsbeispiel vorausgesetzt, die Verstärker 21 mit unterschiedlichen Leistungen arbeiten. Dabei können auch alle Verstärker unterschiedliche Leistungen aufweisen, so dass nicht zwingend zwei Verstärker eine größere Leistung von beispielsweise 25 Watt und zwei Verstärker eine demgegenüber geringere Leistung von beispielsweise 15 Watt aufweisen müssen.

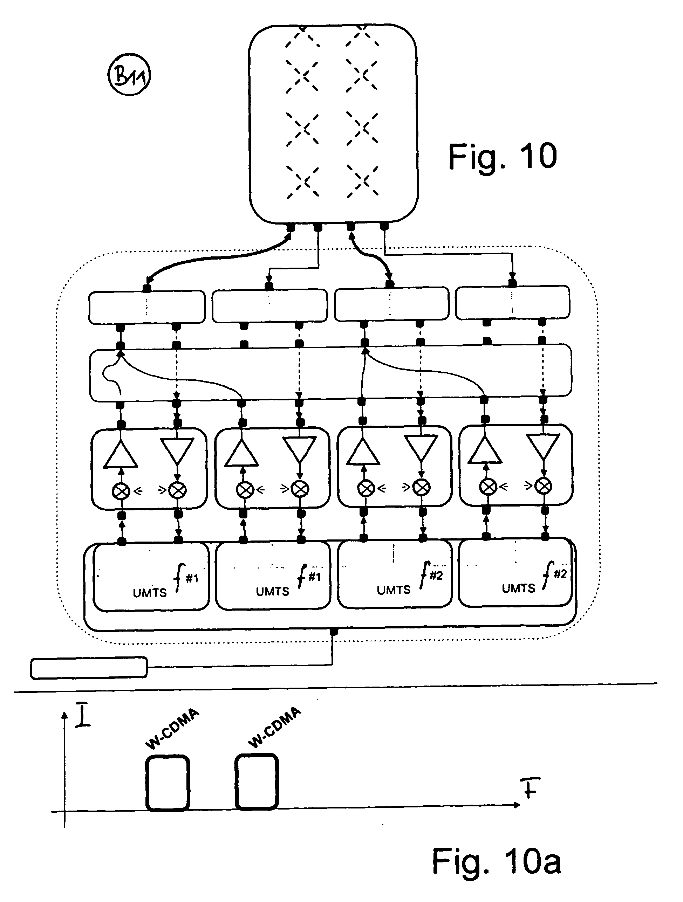

Anhand von Figuren 10 und 10a ist die Konfiguration B11 wiedergegeben, bei der jeweils zwei Paare von Kanälen aufgrund des phasenstarren Betriebs der Verstärker 21 zusammengeschaltet sind. Dadurch ergibt sich ein UMTS-Träger mit der Frequenz f#1 mit 50 Watt und ein UMTS-Träger mit der Frequenz f#2 mit 30 Watt Leistung. In Konfiguration B13 wiederum werden alle vier UMTS-Kanäle bei verschiedenen Trägerfrequenzen f#1 bis f#4 getrennt voneinander betrieben. Dadurch lassen sich vier UMTS-Signale mit einer Bandbreite von beispielsweise 5 MHz übertragen. Obgleich also die Gesamtsendeleistung immer gleich bleibt, wird hier die Leistung im Vergleich zum vorausgegangenen Beispiel auf vier UMTS-Träger aufgeteilt. Dadurch wird zwar die Reichweite und die Sendeleistung für jeden einzelnen UMTS-Träger geringer, es kann aber die vierfache Teilnehmerzahl in einer Zelle versorgt werden. Ein UMTS-Träger kann nicht beliebig viele Teilnehmer versorgen, daher ist es notwendig, zusätzliche UMTS-Träger in der Zelle zur Verfügung zu stellen, wenn die Teilnehmerzahlen steigen.

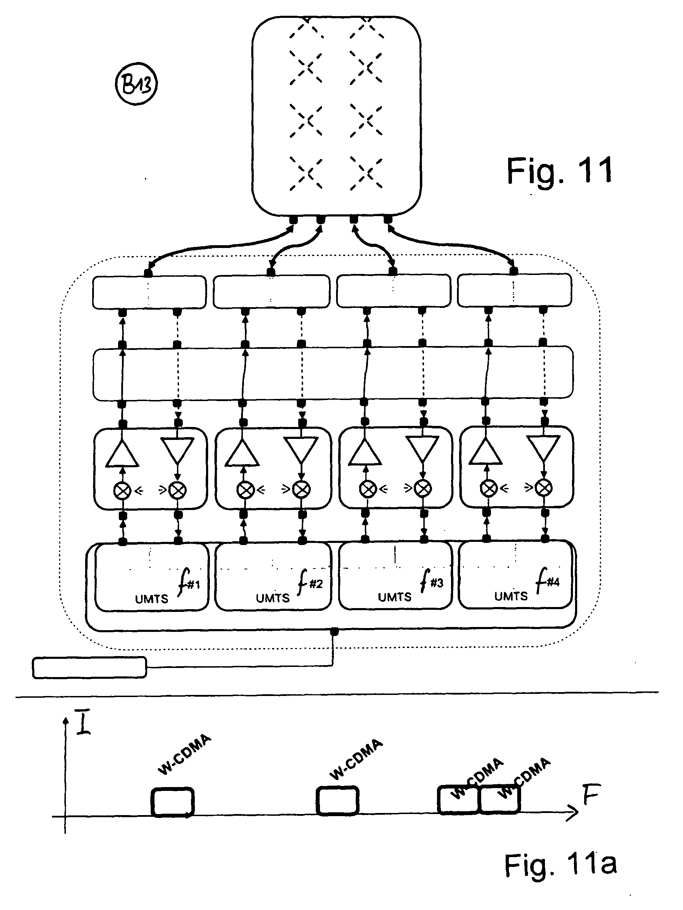

In Figuren 11 und 11a ist ein weiteres Beispiel gemäß Konfiguration B13 gezeigt, bei dem die Empfangs- und Sendeanlage in allen vier Kanälen getrennt betrieben wird.

Nachfolgend wird auf weitere Konfigurationen mit einer Kapazitätserweiterung gemäß dem LTE-Standard eingegangen.

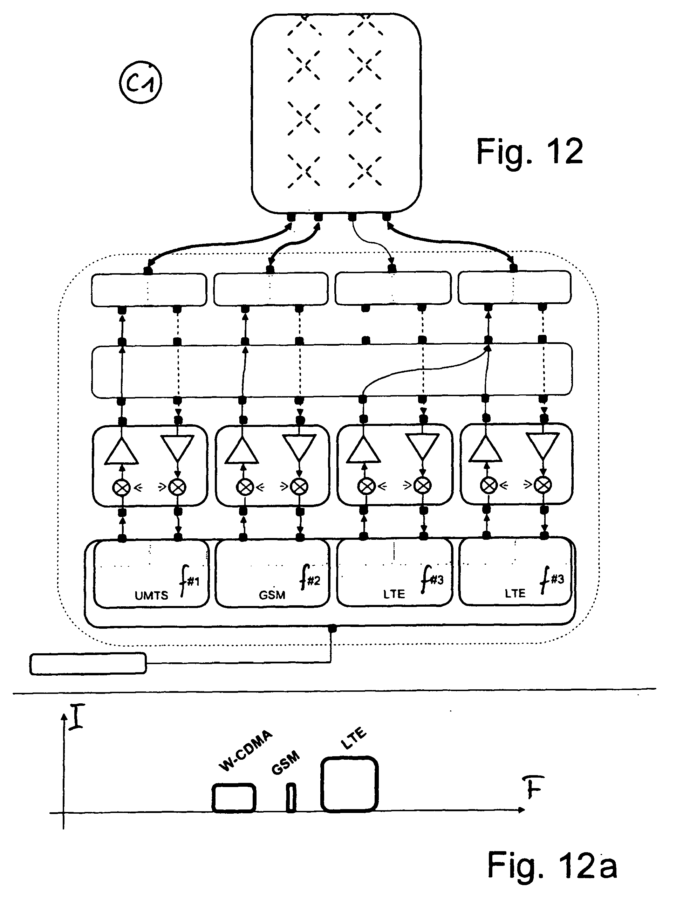

Anhand von Figuren 12 und 12a ist eine weitere Variante (Konfiguration C1) gezeigt, bei der in einem Kanal ein Sendesignal gemäß dem UMTS-Standard mit einer ersten Trägerfrequenz f#1, in einem zweiten Kanal K2 ein GSM-Signal mit einer zweiten Trägerfrequenz f#2 und im dritten und vierten Kanal K3 und K4 ein Signal gemäß dem LTE-Standard mit einer dritten Trägerfrequenz f#3 aufbereitet und den zugeordneten drei Antennensystemen ANT1, ANT2 bzw. ANT4 zugeführt werden. Dadurch wird ein UMTS-Signal beispielsweise mit 25 Watt, ein Sendesignal gemäß dem GSM-Standard im zweiten Kanal K2 ebenfalls mit 25 Watt und durch die synchronisierte Zusammenschaltung der beiden Sendesignale TX1 gemäß dem LTE-Standard für den dritten und vierten Kanal K2 und K4 mit jeweils 15 Watt unter Erzeugung einer erhöhten Reichweite für dieses LTE-Signal mit 30 Watt erzielt.

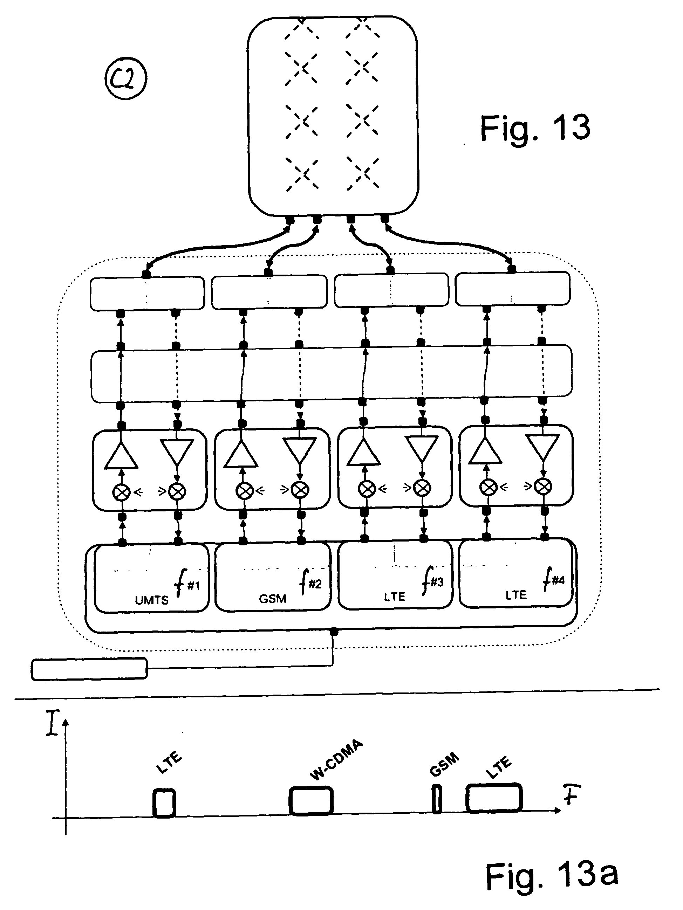

Anhand von Figuren 13 und 13a ist die Konfigurationsvariante C2 wiedergegeben, bei der alle vier Kanäle separat betrieben werden, wobei beispielsweise das LTE-Signal im dritten Kanal K3 für eine niedrigere Trägerfrequenz im Gegensatz zur Trägerfrequenz für den vierten Kanal K4 ausgelegt ist und zudem das Sendesignal TX1 für den dritten Kanal schmalbandiger ist als für den vierten Kanal. Bei einem derartigen Aufbau werden die folgenden Mobilfunkstandards mit einer Sende-Empfangs-Einheit unterstützt:
● 1 GSM Kanal mit 200 KHz Bandbreite
● 1 UMTS Kanal mit 5 MHz Bandbreite, und
● 2 LTE Kanäle mit einer Bandbreite zwischen 1,4 .. 20 MHz

Bei diesem Ausführungsbeispiel ist der LTE-Standard der einzige Standard der eine variable Bandbreitenfestlegung erlaubt.

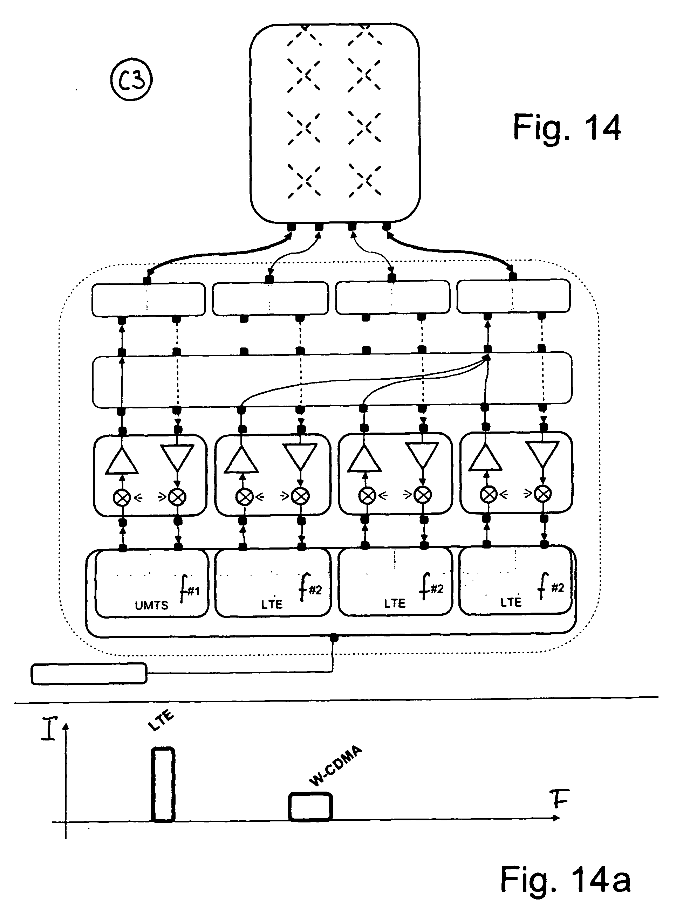

In den Figuren 14 und 14a (Konfiguration C3) sind beispielsweise ein UMTS-Kanal und drei LTE-Kanäle vorgesehen, die alle drei aufgrund der phasenrichtigen Ansteuerung der zugehörigen Verstärker 21 zur Erzeugung eines gemeinsamen Sendesignals TX1 zusammengeschaltet werden können. Dadurch ergeben sich ein LTE-Kanal mit 55 Watt und ein UMTS-Kanal mit 25 Watt.

In der beigefügten Tabelle sind weitere Konfigurationen C4 bis C6 beispielhaft aufgeführt, ohne alle Variationen abschließend darzustellen.

Der erläuterte Aufbau des Remote Radio Head RRH mit seiner großen Variationsbreite, wie er grundsätzlich eingesetzt werden kann, ergibt sich vor allem auch daraus, dass die Verstärker 21 für die Verstärkung des Sendesignals wie aber auch die Verstärker 21' für die Verstärkung des Empfangssignals breitbandig ausgelegt sind. Bevorzugt sind die Verstärker so ausgelegt, dass sie beispielsweise in einem Frequenzbereich von 1.700 MHz bis 2.700 MHz eingesetzt werden können. Könnten die Verstärker noch breitbandiger ausgelegt werden, beispielsweise von 800 MHz oder 900 MHz bis 2.700 MHz, könnte auch noch eine Übertragung in den niedrigeren Frequenzbereichen mit umgesetzt werden. Für die Praxis ist allerdings eine Auslegung für den Bereich von 1.700 MHz bis 2.700 MHz absehbar, wobei in diesem Frequenzbereich die Übertragungen nach dem GSM-, UMTS- oder dem LTE-Verfahren realisierbar sind.

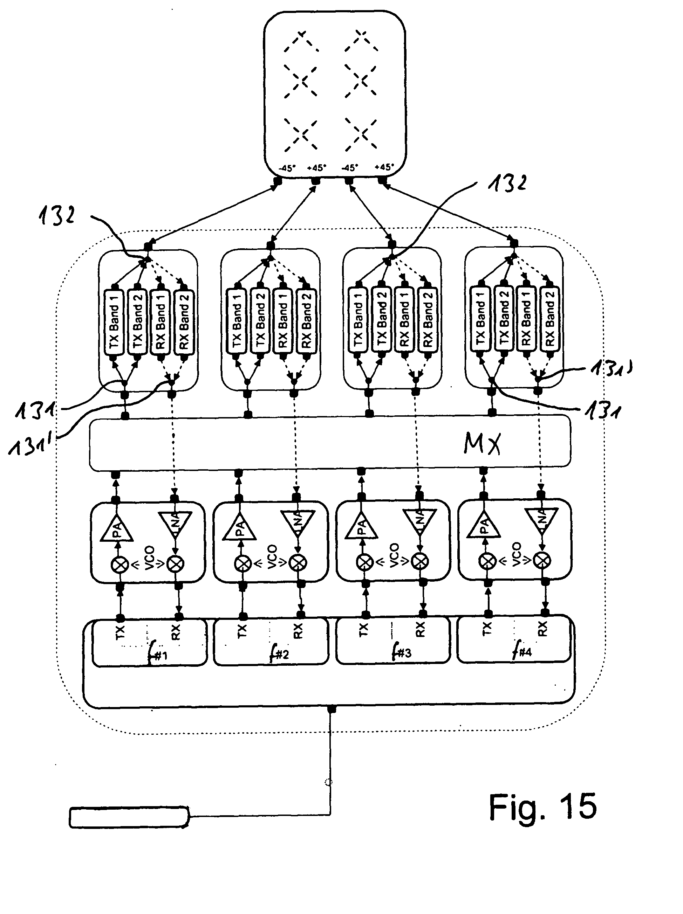

Wenn bezüglich der Breitbandigkeit der verwendeten Duplex-Filter DF1 bis DF4 Probleme bestehen sollten, könnte - wie dies anhand einer Variante gemäß Figur 15 gezeigt ist - eine Verbesserung dadurch erzielt werden, dass die Duplex-Filter-Einrichtungen DF1 bis DF4, hier bevorzugt in Form von Bandpass-Filtern, für die einzelnen Frequenzbänder mit parallel zueinander geschalteten Einzelband-Filtern für das Sendesignal TX bzw. für das Empfangssignal RX aufgebaut sind. Dazu sind gemäß dem Ausführungsbeispiel nach Figur 15 die Bandpass-Filter jeweils mit zwei parallel geschalteten TX-Bandfiltern für unterschiedliche Bandbereiche und zwei für das Empfangssignal parallel geschalteten RX-Bandfiltern für ebenfalls unterschiedliche Bandbereiche ausgestattet, die jeweils an den Ein- und Ausgängen über gemeinsame Sternpunkte 131 bzw. 131' und gegenüberliegend auf der Antennenseite über einen gemeinsamen Sternpunkt 132 zusammengeschaltet sind.

Ideal ist ein nachstimmbares Duplex-Filter welches sich auf die jeweils in dem Kanal genutzte Sende-und Empfangsfrequenz einstellt oder eingestellt wird. Aufgrund der hohen Intermodulationsanforderungen kommen hierfür im Wesentlichen nur nachstimmbare mechanische Komponenten wie beispielsweise MEMS, Piezoelemente oder Motorantriebe in Betracht.

Die PA-Leistungsverstärker 21 für die Sendesignale und die Empfangs-Verstärker 21' (LNA-Verstärker) für die Empfangssignale sind bevorzugt ebenfalls so breitbandig ausgestaltet, dass sie den gesamten benötigten Frequenzbereich abdecken.

Die insbesondere im Zusammenhang mit Figur 2 erwähnte digitale Plattform gemäß der Kanal-Modul-Stufe A kann an den vier Ausgängen/Eingängen der einzelnen Spalten verschiedene Mobilfunkstandards, Frequenzen (und variable Bandbreiten) im gesamten benötigten Frequenzbereich zur Verfügung stellen.

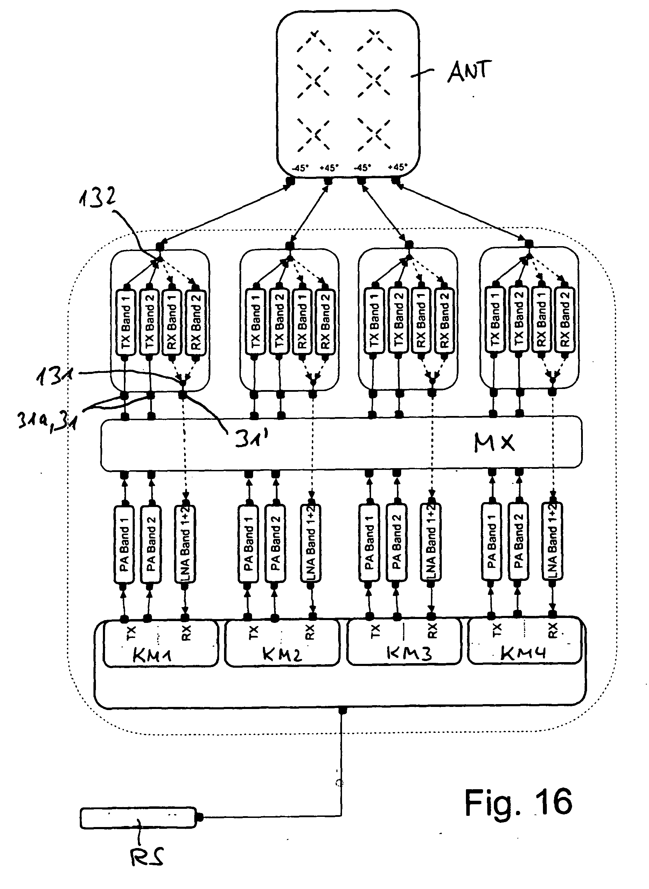

Schließlich wird auch noch auf eine weitere Abwandlung gemäß Figur 16 hingewiesen, bei der eine Abwandlung für die zweite Stufe B dargestellt ist.

Auch bei dieser Variante sind, ähnlich wie bei Figur 15, die in der Filterstufe D vorgesehenen und vorzugsweise als Bandpass-Filter realisierten Filter für die einzelnen Frequenzbänder unter Parallelschaltung zumindest zweier (oder sogar noch mehrerer) Filterstufen aufgebaut, wobei die Filterstufen TX-Band 1 und TX-Band 2 für das jeweilige Sendesignal TX am Ausgang (also zu den Antennensystemen ANT führend) über einen gemeinsamen Sternpunkt 132 zusammengeschaltet sind. An der Eingangsseite 31 bzw. 31' sind nur die RX-Filter für die Empfangssignale zu einem gemeinsamen Sternpunkt 131 zusammengeschaltet. Die Eingangs-Anschlüsse für die TX-Filter für die Sendesignale für die einzelnen Frequenzbänder sind demgegenüber getrennt ausgebildet, nämlich über zwei Eingänge 31a. Dies gilt für jede Filterband-Anordnung in allen vier Kanälen.

Auch die Leistungsverstärker 21 (PA-Verstärker) sind für die einzelnen Frequenzbänder separat aufgebaut. Die Empfangs-Verstärker (LNA-Verstärker) 19' sind breitbandig ausgelegt und decken den gesamten benötigten Frequenzbereich ab.

Die digitale Plattform gemäß der Kanal-Modul-Stufe A kann an den vier Ausgängen/Eingängen der einzelnen Spalten verschiedene Mobilfunkstandards, Frequenzen (und variable Bandbreiten) im gesamten benötigten Frequenzbereich zur Verfügung stellen, ebenso wie in dem Ausführungsbeispiel nach Figur 15.

Da für die Sendesignale TX getrennte Leistungsverstärker 21 für die verschiedenen Frequenzbänder eingesetzt werden, kann gemäß einer weiteren Variante die digitale Plattform (Kanal-Modul-Stufe A) für den Sendepfad getrennte Ausgänge für jedes einzelne Frequenzband zur Verfügung stellen, die dann parallel übertragen werden.

Es sind also die unterschiedlichsten Ausführungsformen beschrieben worden, die einen sehr variablen Betrieb der Sende-Empfangs-Einheit (RRH) ermöglichen. Die Variabilität ergibt sich dabei durch die unterschiedlichen Konfigurationsmöglichkeiten in der Digital-Plattform A, wobei hier die unterschiedlichsten Mobilfunkstandards, wie beispielsweise GSM, UMTS, LTE etc. realisiert werden können, und zwar in beliebigen Zusammensetzungen. Vor allem durch die in Senderichtung vor den Duplex-Filtern DF angeordnete Schaltmatrix kann die hohe Variabilität realisiert werden, da hier die unterschiedlichste Zusammenfassung der Sendesignale bei Bedarf möglich ist. In der Schaltmatrix können die Ausgänge der Sendeverstärker direkt auf die Duplexfilter durchgeschaltet werden oder im Falle der Zusammenführung von Verstärkerausgängen üblicherweise auf einen oder mehrere passive Combiner (üblicherweise Wilkinson-Combiner) zusammengeschaltet werden, so dass somit ein resultierender Sendeverstärker mit einem oder mehreren Ausgängen entsteht. Die Combiner, bevorzugt Wilkinson-Combiner oder Hybid-Combiner, übernehmen die Aufgabe der Entkopplung der Verstärkerausgänge und Anpassung am Zusammenschaltpunkt.

Der Gesamtaufbau ist derart, dass bevorzugt ein Betrieb des Sende-Empfangs-Moduls (RRH) für verschiedene standardisierte Mobilfunk-Frequenzbereiche möglich ist, vorzugsweise für solche, deren Verhältnis von Ober- zu Unter-Frequenz maximal den Faktor 2 : 1 aufweist, so dass somit ein gleichzeitiger Betrieb in bis zu drei Mobilfunk-Frequenzbereichen möglich ist, wobei jeder Kanal bevorzugt in nur maximal einem Frequenzband betrieben wird.

Schließlich ist es auch möglich, den RRH in den verschiedenen Kanälen so zu betreiben, dass einzelne Verstärker eines Kanals in einem nichtlinearisierten Betrieb, beispielsweise AB- oder B-Betrieb arbeiten. Hierdurch werden linear und nichtlinear verstärkte Signale an der Antenne kombiniert. So können hohe Wirkungsgrade von Verstärkern im nichlinearen Betrieb genutzt werden. Dieser Verstärker wird üblicherweise umschaltbar ausgelegt, damit er in einem linearisierten oder nichtlinearisierten Betrieb arbeiten kann.

Der linearisierte bzw. nichtlinearisierte Betrieb wird durch eine Verschiebung bzw. Umschaltung des Arbeitspunktes in der Endstufe erreicht.

Zusammenfassend kann also festgehalten werden, dass es im Rahmen der erfindungsgemäßen Vorrichtung möglich ist
● unterschiedlichste Standards zu unterstützen,
● die gesamte Anlage vielfältig zu konfigurieren (wodurch sich die Einsatzbreite gegenüber herkömmlichen Lösungen mit geringerem Aufwand deutlich verbessern lässt),
● unterschiedliche Träger (Trägerfrequenzen) über verschiedene Zweige (Kanäle) zu übertragen oder bei Bedarf entsprechend den Gegebenheiten zusammenzuschalten, und
● auch eine Mehrfrequenzbereichsanordnung (Multiband) zu realisieren, wenn insbesondere die Leistungsverstärker und/oder die Duplex-Filter in parallel geschalteten Mehrfachkomponenten realisiert werden oder abstimmbare Filter enthalten, um die Breitbandigkeit zu verbessern.

Anhand der geschilderten Ausführungsbeispiele ist gezeigt worden, dass sich im Rahmen der Erfindung nicht nur eine hohe Variabilität bezüglich der Vorrichtung zum Senden und Empfangen von Signalen, insbesondere für den Mobilfunkbereich sicherstellen lässt, sondern dass darüber hinaus auch eine optimale Anpassung oder vorbereitende Einrichtung möglich ist, um die gesamte Anlage in nicht bekannter Weise breitbandig zu betreiben, beispielsweise dadurch:
● dass die Duplexfilter zumindest zwei parallel geschaltete Sendesignal-Bandpassfilter umfassen, die eingangsseitig über einen Sternpunkt und gegebenenfalls auch antennenseitig über einen gemeinsamen Sternpunkt zusammengeschaltet sind,
● dass die Duplexfilter automatisch in der Frequenz abstimmbar oder nachführbar sind oder zumindest ein automatisch mit der Frequenz abstimmbares oder nachführbares Filter enthalten.

Schließlich ist im Rahmen der verschiedenen Ausführungsbeispiele auch erläutert, dass die Vorrichtung zum Senden und Empfangen von entsprechenden Signalen, insbesondere für den Mobilfunkbereich, eine phasenrichtige Abstrahlung der verschiedenen TX-Signale ermöglicht, um dadurch ein resultierendes Strahlungsdiagramm zu erzeugen, wobei die antennenseitigen Filterstufen kanalweise über die zugeordneten Leistungsverstärker angesteuert werden können oder bevorzugt dazwischen eine Schaltmatrix vorgesehen ist, um die gesamte Anlage unterschiedlich betreiben zu können. Äquivalent lässt sich eine Strahlungsformung für den Empfangsfall realisieren.

Aufgrund des erläuterten Aufbaus der Vorrichtung ergibt sich dadurch auch ein entsprechendes Verfahren, wie diese Vorrichtung betrieben wird, wie also in den einzelnen Kanälen die Sendesignale verstärkt, phasenrichtig oder phasenstarr gekoppelt und schließlich in entsprechenden unterschiedlichen Betriebsmoden aufaddiert werden können, um für bestimmte Standards eine Kapazitätserweiterung oder eine erhöhte Reichweite des Sendesignals zu ermöglichen. Von daher ist im Rahmen der erläuterten Vorrichtung auch ein entsprechendes Verfahren zum Betrieb einer derartigen Vorrichtung in vollem Umfang offenbar.

| **Beispiel: Konfiguration A:EIN STANDARD (z.B GSM) 4 GSM Kanäle GSM_TX1.......GSM_TX4** | | | | | | | |
|---|---|---|---|---|---|---|---|
| **Konfiguration** | **RHH** | | | | **Zusammenschaltung der Sendekanäle über Schaltmatrix** | | **Anwendungsfall / Ziel** |
| | **Spalte 1** | **Spalte 2** | **Spalte 3** | **Spalte 4** | **Zusammenschaltung Spalten** | **Resultat** | |
| A 1 | GSM | GSM | GSM | GSM | ja | | |
| | Tx1 | Tx1 | Tx1 | Tx1 | Spalte 1 + Spalte 2 + Spalte 3 + Spalte 4 | 1 GSM Kanal mit 80 Watt | Grosse Reichweite |
| A 2 | GSM | GSM | GSM | GSM | ja | | |
| | Tx1 | Tx1 | Tx2 | Tx2 | Spalte 1 + Spalte 2 | 1 GSM Kanal mit 50 Watt | Verdoppelung der Kapazität |
| | | | | | Spalte 3 + Spalte 4 | 1 GSM Kanal mit 30 Watt | bei guter Reichweite |
| A 3 | GSM | GSM | GSM | GSM | ja | | |
| | Tx1 | Tx2 | Tx1 | Tx2 | Spalte 1 + Spalte 3 | 2 GSM Kanäle mit je 40 Watt | Verdoppelung der Kapazität |
| | | | | | Spalte 2 + Spalte 4 | | bei guter Reichweite |
| A 4 | GSM | GSM | GSM | GSM | nein | 2 GSM Kanäle mit je 25W | Maximale Kapazität |
| | Tx1 | Tx2 | Tx3 | Tx3 | | 2 GSM Kanäle mit je 15W | |

| **Beispiel: 2 STANDARDS (z.B. GSM und UMTS) - Ausgangskonfiguration B: 2 GSM Kanäle und 2 UMTS Kanäle** | | | | | | | |
|---|---|---|---|---|---|---|---|
| **Konfiguration** | **RRH** | | | | **Zusammenschaltung der Sendekanäle über Schaltmatrix** | | **Anwendungsfall / Ziet** |
| | **Spalte 1** | **Spalte 2** | **Spalte 3** | **Spalte 4** | **Zusammenschaltung Spalten** | **Resultat** | |
| B1 | GSM | GSM | UMTS | UMTS | ja | | |
| | Tx1 | Tx1 | Tx1 | Tx1 | Spalte 1 + Spalte 2 | 1 GSM Kanal mit 50 Watt | Erhöhte Reichweite GSM |
| | | | | | Spalte 3 + Spalte 4 | 1 UMTS Kanal mit 30 Watt | Erhöhte Reichweite UMTS |
| B2 | GSM | GSM | UMTS | UMTS | ja | | |
| | Tx1 | Tx1 | Tx1 | Tx2 | Spalte 1 + Spalte 2 | 1 GSM Kanal mit 50 Watt | Erhöhte Reichweite GSM |
| | | | | | | 2 UMTS Kanal mit je 15 Watt | Kapazitätserweiterung UMTS |
| B3 | GSM | GSM | UMTS | UMTS | ja | | |
| | Tx1 | Tx2 | Tx1 | Tx1 | | 2 GSM Kanäle mit je 25 Watt | Kapazitätserweiterung GSM |
| | | | | | Spalte 3 + Spalte 4 | 1 UMTS Kanal mit 30 Watt | Erhöhte Reichweite UMTS |
| B4 | GSM | GSM | UMTS | UMTS | nein | | |
| | Tx1 | Tx2 | Tx1 | Tx2 | | 2 GSM Kanäle mit je 25 Watt | Kapazitätserweiterung GSM |
| | | | | | | 2 UMTS Kanäle mit je 15 Watt | Kapazitätserweiterung UMTS |

| **Umschaltung eines GSM Kanals auf UMTS** | | | | | | | |
|---|---|---|---|---|---|---|---|
| B5 | GSM | UMTS | UMTS | UMTS | ja | | |
| | Tx1 | Tx1 | Tx1 | Tx1 | | 1 GSM Kanal mit 25 Watt | |
| | | | | | Spalte 2 + Spalte 3 + Spalte 4 | 1 UMTS Kanal mit 55 Watt | Erhöhte Reichweite UMTS |
| B6 | | | | | ja | | |
| | GSM | UMTS | UMTS | UMTS | | 1 GSM Kanal mit 25 Watt | Reichweite GSM |
| | Tx1 | Tx1 | Tx2 | Tx2 | | 1 UMTS Kanal mit 25 Watt | Kapazitätserweiterung UMTS |
| | | | | | Spalte 3 + Spalte 4 | 1 UMTS Kanal mit 30 Watt | |
| B7 | GSM | UMTS | UMTS | UMTS | ja | 1 GSM Kanal mit 25 Watt | |
| | Tx1 | Tx1 | Tx1 | Tx2 | Spalte 2 + Spalte 3 | 1 UMTS Kanal mit 40 Watt | Kapazitätserweiterung UMTS |
| | | | | | | 1 UMTS Kanal mit 15 Watt | |
| B8 | GSM | UMTS | UMTS | UMTS | | 1 GSM Kanal mit 25 Watt | |
| | Tx1 | Tx1 | Tx2 | Tx3 | nein | 1 UMTS Kanal mit 40 Watt | Kapazitätserweiterung UMTS |
| | | | | | | 2 UMTS Kanäle mit je 15 Watt | |

| **Umschaltung des zweiten GSM Kanals auf UMTS** | | | | | | | |
|---|---|---|---|---|---|---|---|
| B9 | UMTS | UMTS | UMTS | UMTS | ja | | |
| | Tx1 | Tx1 | Tx1 | Tx1 | Spalte 1 + Spalte 2 + Spalte 3 + Spalte 4 | 1 UMTS Kanal mit 80 Watt | Maximale Reichweite UMTS |
| B10 | | | | | ja | | |
| | UMTS | UMTS | UMTS | UMTS | | 1 UMTS Kanal mit 25 Watt | Kapazitätserweiterung UMTS |
| | Tx1 | Tx2 | Tx2 | Tx2 | Spalte 2 + Spalte 3 + Spalte 4 | 1 UMTS Kanal mit 55 Watt | |
| B11 | | | | | ja | | |
| | UMTS | UMTS | UMTS | UMTS | Spalte 1 + Spalte 2 | 1 UMTS Kanal mit 50 Watt | Kapazitätserweiterung UMTS |
| | Tx1 | Tx1 | Tx2 | Tx2 | Spalte 3 + Spalte 4 | 1 UMTS Kanal mit 30 Watt | |
| B12 | | | | | ja | | |
| | UMTS | UMTS | UMTS | UMTS | Spalte 1 + Spalte 3 | 1 UMTS Kanal mit 40 Watt | Kapazitätserweiterung UMTS |
| | Tx1 | Tx2 | Tx1 | Tx2 | Spalte 2 + Spalte 4 | 1 UMTS Kanal mit 40 Watt | |
| B13 | UMTS | UMTS | UMTS | UMTS | nein | 2 UMTS Kanäle mit 25 Watt | Maximale Kapazität UMTS |
| | Tx1 | Tx2 | Tx3 | Tx4 | | 2 UMTS Kanal mit 15 Watt | |

| **Beispiel: 3 STANDARDS (z.B. GSM, UMTS und LTE) - Ausgangskonfiguration B: 1 GSM Kanal, 1 UMTS Kanal und 2 LTE Kanäle** | | | | | | | |
|---|---|---|---|---|---|---|---|
| **konfiguration** | **RRH** | | | | **Zusammenschaltung der Sendekanäle über Schaltmatrix** | | **Anwendungsfall / Ziel** |
| | **Spalte 1** | **Spalte 2** | **Spalte 3** | **Spalte 4** | **Zusammenschaltung Spalten** | **Resultat** | |
| C1 | | | | | ja | | |
| | UMTS | GSM | LTE | LTE | | 1 GSM Kanal mit 25 Watt | |
| | Tx1 | Tx2 | Tx3 | Tx3 | | 1 UMTS Kanal mit 25 Watt | |
| | | | | | Spalte 3 + Spalte 4 | 1 LTE Kanal mit 30 Watt | Erhöhte Sendeleistung LTE |
| C2 | | | | | nein | | |
| | UMTS | GSM | LTE | LTE | | 1 GSM Kanal mit 25 Watt | |
| | Tx1 | Tx2 | Tx3 | Tx4 | | 1 UMTS Kanal mit 25 Watt | |
| | | | | | | 2 LTE Kanäle mit je 15 Watt | Kapazitätserweiterung LTE |

| **Umschaltung eines GSM Kanals auf LTE** | | | | | | | |
|---|---|---|---|---|---|---|---|
| C3 | | | | | ja | | |
| | UMTS | LTE | LTE | LTE | | 1 UMTS Kanal mit 25 Watt | |
| | Tx1 | Tx2 | Tx2 | Tx2 | Spalte 2 + Spalte 3 + Spalte 4 | 1 LTE Kanal mit 55 Watt | Erhöhte Sendeleistung LTE |
| C4 | | | | | nein | | |
| | UMTS | LTE | LTE | LTE | | 1 UMTS Kanal mit 25 Watt | |
| | Tx1 | Tx2 | Tx3 | Tx4 | | 1 LTE Kanal mit 25 Watt | |
| | | | | | | 2 LTE Kanäle mit je 15 Watt | Kapazitätserweiterung LTE |
| C5 | | | | | ja | | |
| | UMTS | LTE | LTE | LTE | | 1 UMTS Kanal mit 25 Watt | |
| | Tx1 | Tx2 | Tx3 | Tx3 | | 1 LTE Kanal mit 25 Watt | |
| | | | | | Spalte 3 + Spalte 4 | 1 LTE Kanal mit 30 Watt | Kapazitätserweiterung LTE |
| C6 | | | | | ja | | |
| | UMTS | LTE | LTE | LTE | | 1 UMTS Kanal mit 25 Watt | |
| | Tx1 | Tx2 | Tx2 | Tx3 | Spalte 2 + Spalte 3 | 1 LTE Kanal mit 40 Watt | |
| | | | | | | 1 LTE Kanal mit 15 Watt | Kapazitätserweiterung LTE |

| **Umschaltung eines UMTS Kanals auf LTE** | | | | | | | |
|---|---|---|---|---|---|---|---|
| C7 | LTE | LTE | LTE | LTE | ja | | |
| | Tx2 | Tx2 | Tx2 | Tx2 | Spalte 1 + Spalte 2 + Spalte 3 + Spalte 4 | 1 LTE Kanal mit 80 Watt | Maximale Sendeleistung LTE |

## Patentansprüche

1. Vorrichtung zum Senden und vorzugsweise zum Empfangen von Signalen, insbesondere Mobilfunksignalen, mittels mehrerer Kanäle (K1, K2, K3, K4), mit folgenden Merkmalen:
- jeder Kanal (K1, K2, K3, K4) umfasst eine Sendeeinheit zum Übertragen von Sendesignalen (TX) und vorzugsweise eine Empfangseinheit zum Empfangen von Empfangssignalen (RX),
- in jedem Kanal (K1, K2, K3, K4) ist zur Aufbereitung des Sendesignals (TX) zumindest ein Leistungsverstärker (21) vorgesehen,
- die Vorrichtung ist mit antennenseitigen Anschlüssen (32; 32a, 32b, 32c, 32d) zur Übertragung der Sendesignale (TX) mit einer nachgeschalteten Antenneneinrichtung (ANT; ANT1, ANT2, ANT3, ANT4) versehen,
- die Vorrichtung umfasst ferner für jeden Kanal (K; K1, K2, K3, K4) Filterstufen (DF1, DF2, DF3, DF4), vorzugsweise in Form von Duplex-Filtern (DF1, DF2, DF3, DF4),
- die Vorrichtung umfasst für den Sendebetrieb mindestens 4 Kanäle,
**gekennzeichnet durch** die folgenden weiteren Merkmale:
- jeder der mindestens vier Kanäle (K1, K2, K3, K4) für den Sendebetrieb kann mit einem, von den anderen Kanälen (K1, K2, K3, K4) unterschiedlichen Sendesignal angesteuert werden, welches mit einem separaten Kanal-modul (KM1, KM2, KM3, KM4) aus verschiedenen Datenströmen erzeugt werden kann, und
- es ist eine Kontrollereinrichtung (33) vorgesehen, worüber mehrere oder alle Leistungsverstärker (21; 21a, 21b, 21c, 21d), die in mehreren oder allen Kanälen (K; K1, K2, K3, K4) geschaltet sind, phasenrichtig oder phasenstarr zueinander betreibbar sind, dergestalt, dass die in den betreffenden Kanälen (K; K1, K2, K3, K4) verstärkten Sendesignale (TX) synchronisierbar und zusammenschaltbar sind, wodurch ein betreffendes Sendesignal (TX) mit höherer Sendeleistung ausstrahlbar ist.

2. Vorrichtung nach Anspruch 1, **dadurch gekennzeichnet, dass** die Duplexfilter (DF1, DF2, DF3, DF4) zumindest zwei parallel geschaltete Sendesignal-Bandpassfilter umfassen, die antennenseitig über einen Sternpunkt (132) zusammengefasst sind.

3. Vorrichtung nach Anspruch 2, **dadurch gekennzeichnet, dass** die für das Sendesignal (TX) parallel geschalteten und unterschiedlichen Frequenzbereiche abdeckende Duplex-filter (DF1, DF2, DF3, DF4) antennen- und eingangsseitig über jeweils einen gemeinsamen Sternpunkt (131;132) zusammengeschaltet sind.

4. Vorrichtung nach Anspruch 1 bis 3, **dadurch gekennzeichnet, dass** die Duplexfilter automatisch in der Frequenz abstimmbar oder nachführbar sind oder zumindest ein automatisch in der Frequenz abstimmbares oder nachführbares Filter enthalten.

5. Vorrichtung nach einem der Ansprüche 1 bis 4 , **dadurch gekennzeichnet, dass** zwischen den basisstationsseitigen Anschlüssen (31; 31') der Duplexfilter (DF1, DF2, DF3, DF4) und den Leistungsverstärkern (21) für die Verstärkung der Sendesignale (TX) eine Schaltmatrix (MX) vorgesehen ist.

6. Vorrichtung nach einem der Ansprüche 1 bis 5, **dadurch gekennzeichnet, dass** mittels der Schaltmatrix (MX) unterschiedliche Verstärker (21) aus unterschiedlichen Kanälen (K; K1, K2, K3, K4) sendeseitig so zusammenschaltbar sind, dass die betreffenden getrennt verstärkten Sendesignale (TX) synchronisiert aufaddiert werden.

7. Vorrichtung nach einem der Ansprüche 5 und 6, **dadurch gekennzeichnet, dass** die Schaltmatrix (MX) Koppler zur entkoppelten Zusammenschaltung der Verstärkerausgänge enthält.

8. Vorrichtung nach einem der Ansprüche 1 bis 4, **dadurch gekennzeichnet, dass** bereits in der Vorrichtung zum Senden und/oder Empfangen eine phasenrichtige Aufsummierung der verschiedenen Empfangssignale (RX) zur Erzeugung eines resultierenden Strahlungsdiagrammes erfolgt.

9. Vorrichtung nach einem der Ansprüche 1 bis 8, **dadurch gekennzeichnet, dass** mittels der Kontrollereinrichtung (33) die verstärkten Sendesignale (TX) in den verschiedenen Kanälen (K; K1, K2, K3, K4) linearisiert werden.

10. Vorrichtung nach einem der Ansprüche 1 bis 9, **dadurch gekennzeichnet, dass** die Leistungsverstärker (21) in den verschiedenen Kanälen (K; K1, K2, K3, K4) zumindest teilweise mit unterschiedlicher Sendeleistung und/oder Phasenlage betrieben werden.

11. Vorrichtung nach einem der Ansprüche 1 bis 10, **dadurch gekennzeichnet, dass** in den einzelnen Kanälen (K; K1, K2, K3, K4) Sendesignale (TX) gemäß einem gleichen oder einem unterschiedlichen Mobilfunkstandard übertragen werden.

12. Vorrichtung nach einem der Ansprüche 1 bis 11, **dadurch gekennzeichnet, dass** in den einzelnen Kanälen (K; K1, K2, K3, K4) Sendesignale (TX) gemäß einer beliebigen Kombination aus zwei oder mehreren der Standards GSM, UMTS, LTE oder WiMax übertragen werden.

13. Vorrichtung nach einem der Ansprüche 1 bis 12, **dadurch gekennzeichnet, dass** die Leistungsverstärker (21) in den verschiedenen Kanälen (K; K1, K2, K3, K4) breitbandig ausgelegt sind, vorzugsweise mit einer Bandbreite, die mehr als ein Sendeband (GSM- oder UMTS- oder LTE-Band) überschreitet.

14. Vorrichtung nach einem der Ansprüche 1 bis 13, **dadurch gekennzeichnet, dass** die Ausgänge der Sendeverstärker (21, PA) insbesondere im Falle der Zusammenführung von in unterschiedlichen Kanälen (K1, K2, K3, K4) verstärkten Sendesignalen (TX) auf einen oder mehrere vorzugsweise passive Combiner erfolgt, wodurch ein Sendeverstärker mit einem oder mehreren Ausgängen gebildet ist.

15. Vorrichtung nach Anspruch 14, **dadurch gekennzeichnet, dass** der Combiner aus einem Wilkinson-Combiner oder einem Hybrid-Combiner besteht oder diesen umfasst.

16. Vorrichtung nach Anspruch 14 oder 15, **dadurch gekennzeichnet, dass** mittels der Combiner eine Entkopplung der Verstärkerausgänge (23) und/oder eine Anpassung am Zusammenschaltpunkt realisiert wird.

## Claims

1. A device for transmitting and preferably receiving signals, in particular mobile telephony signals, by means of multiple channels (K1, K2, K3, K4), with the following characteristics:
- each channel (K1, K2, K3, K4) comprises a transmission unit for sending transmission signals (TX) and preferably a receiver unit for receiving reception signals (RX),
- in each channel (K1, K2, K3, K4) at least one power amplifier (21) is provided for conditioning of the transmission signal (TX),
- the device is provided with connections on the antenna side (32; 32a, 32b, 32c, 32d) for sending the transmission signals (TX) with a downstream antenna device (ANT; ANT1, ANT2, ANT3, ANT4),
- the device further comprises for each channel (K; K1, K2, K3, K4) filter stages (DF1, DF2, DF3, DF4), preferably in the form of duplex filters (DF1, DF2, DF3, DF4),
- the device comprises at least 4 channels for the transmission operation,
**characterized by** the following additional characteristics:
- each of the at least 4 channels (K1, K2, K3, K4) can, for the transmission operation, be controlled with a transmission signal, that is different from the other channels (K1, K2, K3, K4), which can be generated with a separate channel module (KM1, KM2, KM3, KM4) from various data streams, and
- a controller device (33) is provided for, via which several or all of the power amplifiers (21; 21a, 21b, 21c, 21d), which are connected in several or all channels (K; K1, K2, K3, K4), can be operated in-phase or phase-locked with each other, in such a way that the transmission signals (TX) amplified in the channels concerned (K; K1, K2, K3, K4) can be synchronized and interconnected, as a result of which a transmission signal in question can be radiated with a higher transmission power.

2. The device as claimed in claim 1, **wherein** the duplex filter (DF1, DF2, DF3, DF4) comprises at least two transmission signal band-pass filters connected in parallel, which on the antenna side are combined via a star point (132) .

3. The device as claimed in claim 2, **wherein** the duplex filters (DF1, DF2, DF3, DF4) for the transmission signal (TX) connected in parallel and covering various frequency ranges on the antenna side and input side are interconnected in each case via a common star point (131; 132).

4. The device as claimed in claims 1 to 3, **wherein** the duplex filters can be automatically frequency tuned or tracked or at least contain a filter that can be automatically frequency tuned or tracked.

5. The device as claimed in one of claims 1 to 4, **wherein** between the connections (31; 31') on the base station side of the duplex filters (DF1, DF2, DF3, DF4) and power amplifiers (21) for amplification of the transmission signal (TX) a switching matrix (MX) is provided.

6. The device as claimed in one of claims 1 to 5, **wherein** by means of the switching matrix (MX) different amplifiers (21) from different channels (K; K1, K2, K3, K4) can be interconnected on the transmission side in such a way that the separately amplified transmission signals (TX) concerned are summed in a synchronized manner.

7. The device as claimed in one of claims 5 and 6, **wherein** the switching matrix (MX) contains couplers for decoupled interconnection of the amplifier outputs.

8. The device as claimed in one of claims 1 to 4, **wherein** an in-phase summation of the various reception signals (RX) for generating a resultant radiation diagram takes place previously in the device for transmitting and/or receiving.

9. The device as claimed in one of claims 1 to 8, **wherein** by means of the controller device (33) the amplified transmission signals (TX) in the various channels (K; K1, K2, K3, K4) are linearized.

10. The device as claimed in one of claims 1 to 9, **wherein** the power amplifiers (21) in the various channels (K; K1, K2, K3, K4) are at least in part operated with differing transmission power and/or phase angle.

11. The device as claimed in one of claims 1 to 10, **wherein** in the individual channels (K; K1, K2, K3, K4) transmission signals (TX) are transmitted according to the same or a different mobile telephony standard.

12. The device as claimed in one of claims 1 to 11, **wherein** in the individual channels (K; K1, K2, K3, K4) transmission signals (TX) according to any combination of two or more standards GSM, UMTS, LTE or WiMAX are transmitted.

13. The device as claimed in one of claims 1 to 12, **wherein** the power amplifiers (21) in the various channels (K; K1, K2, K3, K4) are designed with a broadband range, preferably with a range that exceeds one transmission band (GSM or UMTS or LTE band).

14. The device as claimed in one of claims 1 to 13, **wherein** the outputs of the transmission amplifier (21, PA) in particular in the case of the combining of transmission signals (TX) amplified in different channels (K1, K2, K3, K4) takes place on one or more preferably passive combiners, whereby a transmission amplifier with one or more outputs is formed.

15. The device as claimed in claim 14, **wherein** the combiner consists of or comprises a Wilkinson combiner or a hybrid combiner.

16. The device as claimed in claim 14 or 15, **wherein** by means of the combiner a decoupling of the amplifier outputs (23) and/or an adaptation at the interconnection point is carried out.

## Revendications

1. Dispositif pour émettre et de préférence pour recevoir des signaux, en particulier des signaux de radiotéléphonie mobile, au moyen de plusieurs canaux (K1, K2, K3, K4), présentant les éléments techniques suivants :
- chaque canal (K1, K2, K3, K4) comprend une unité émettrice pour transmettre des signaux émis (TX) et de préférence une unité réceptrice pour recevoir des signaux reçus (RX),
- dans chaque canal (K1, K2, K3, K4) il est prévu au moins un amplificateur de puissance (21) pour la préparation du signal émis (TX),
- le dispositif est doté de bornes (32 ; 32a, 32b, 32c, 32d) du côté antenne pour la transmission des signaux émis (TX) avec un système d'antennes (ANT ; ANT1, ANT2, ANT3, ANT4) branché à la suite,
- le dispositif comprend en outre pour chaque canal (K ; K1, K2, K3, K4) des étages de filtre (DF1, DF2, DF3, DF4), de préférence sous la forme de filtres duplex (DF1, DF2, DF3, DF4),
- le dispositif comprend au moins quatre canaux pour le fonctionnement en émission,
**caractérisé par** les caractéristiques suivantes :
- chacun desdits au moins quatre canaux (K1, K2, K3, K4) pour le fonctionnement en émission peut être piloté avec un signal émis différent des autres canaux (K1, K2, K3, K4), signal qui peut être engendré avec un module de canal séparé (KM1, KM2, KM3, KM4) à partir de flux de données différents, et
- il est prévu un système de contrôle (33) au moyen duquel plusieurs amplificateurs de puissance ou tous les amplificateurs de puissance (21 ; 21a, 21b, 21c, 21 d), qui sont branchés dans plusieurs canaux ou dans tous les canaux (K ; K1, K2, K3, K4), sont susceptibles de fonctionner de manière correctement phasée ou en phase bloquée les uns par rapport aux autres, de telle façon que les signaux émis (TX) amplifiés dans les canaux concernés (K ; K1, K2, K3, K4) peuvent être synchronisés et regroupés, grâce à quoi un signal émis concerné (TX) peut être diffusé avec une puissance d'émission supérieure.

2. Dispositif selon la revendication 1, **caractérisé en ce que** les filtres duplex (DF1, DF2, DF3, DF4) comprennent au moins de filtre passe-bande branché en parallèle pour le signal émis, qui sont regroupés du côté antenne via un point neutre (132).

3. Dispositif selon la revendication 2, **caractérisé en ce que** les filtres duplex (DF1, DF2, DF3, DF4) branchés en parallèle pour le signal émis (TX) et couvrant des plages de fréquences différentes, sont regroupés du côté antenne et du côté entré via un point neutre commun respectif (131 ; 132).

4. Dispositif selon les revendications 1 à 3, **caractérisé en ce que** les filtres duplex peuvent être accordés ou réajustés automatiquement en fréquence, ou contiennent au moins un filtre qui peut être accordé ou réajusté automatiquement en fréquence.

5. Dispositif selon l'une des revendications 1 à 4, **caractérisé en ce qu'**il est prévu une matrice de commutation (MX) entre les bornes (31 ; 31'), côté station de base, des filtres duplex (DF1, DF2, DF3, DF4) et les amplificateurs de puissance (21) pour l'amplification des signaux émis (TX).

6. Dispositif selon l'une des revendications 1 à 5, **caractérisé en ce que**, au moyen de la matrice de commutation (MX), différents amplificateurs (21) de différents canaux (K ; K1, K2, K3, K4) peuvent être commutés ensemble du côté émetteur, de telle façon que les signaux émis (TX) considérés qui sont amplifiés séparément sont additionnés de manière synchronisée.

7. Dispositif selon l'une des revendications 5 et 6, **caractérisé en ce que** la matrice de commutation (MX) contient des coupleurs pour brancher ensemble les sorties des amplificateurs de façon découplée.

8. Dispositif selon l'une des revendications 1 à 4, **caractérisé en ce qu'**une sommation en phase correcte des différents signaux reçus (RX) a déjà lieu dans le dispositif pour l'émission et/ou la réception, pour générer un diagramme de rayonnement résultant.

9. Dispositif selon l'une des revendications 1 à 8, **caractérisé en ce que** les signaux émis amplifiés (TX) sont linéarisés dans les différents canaux (K ; K1, K2, K3, K4) au moyen du système de contrôle (33).

10. Dispositif selon l'une des revendications 1 à 9, **caractérisé en ce que** les amplificateurs de puissance (21) sont amenés à fonctionner dans les différents canaux (K ; K1, K2, K3, K4) au moins partiellement avec une puissance d'émission et/ou une situation en phase différente.

11. Dispositif selon l'une des revendications 1 à 10, **caractérisé en ce que** des signaux émis (TX) sont transmis dans les canaux individuels (K ; K1, K2, K3, K4) selon un standard de radiotéléphonie mobile identique ou différent.

12. Dispositif selon l'une des revendications 1 à 11, **caractérisé en ce que** des signaux émis (TX) sont transmis dans les canaux individuels (K ; K1, K2, K3, K4) selon une combinaison quelconque de deux ou plusieurs des standards GSM, EMTS, LTE ou WiMax.

13. Dispositif selon l'une des revendications 1 à 12, **caractérisé en ce que** les amplificateurs de puissance (21) dans les différents canaux (K ; K1, K2, K3, K4) sont conçus à large bande, de préférence avec une largeur de bande qui dépasse plus d'une bande d'émission (bande GSM ou UMTS ou LTE).

14. Dispositif selon l'une des revendications 1 à 13, **caractérisé en ce que** les sorties des amplificateurs d'émission (21, PA), en particulier dans le cas du regroupement de signaux émis (TX) amplifiés dans des canaux différents (K1, K2, K3, K4) ont lieu sur un ou plusieurs combineurs, de préférence passifs, grâce à quoi un amplificateur d'émission avec une ou plusieurs sorties est constitué.

15. Dispositif selon la revendication 14, **caractérisé en ce que** le combineur est formé par un combineur Wilkingson ou un combineur hybride, ou inclut un tel combineur.

16. Dispositif selon la revendication 14 ou 15, **caractérisé en ce que**, au moyen des combineurs, on réalise un découplage des sorties (23) des amplificateurs et/ou un ajustement au niveau du point de commutation commun.
